# EUROPEAN PATENT APPLICATION

(11) **EP 4 460 054 A1**
(43) Date of publication of application: **06.11.2024**
(21) Application number: 23746451.6
(22) Date of filing: 29.01.2023
(51) Int. Cl.: H04W 8/06, H04W 8/26, H04W 36/00, H04W 48/16

(54) **EQUIPMENT SELECTION METHOD AND APPARATUS**

(30) Priority: 30.01.2022 CN 202210114818
(71) Applicant: Huawei Technologies Co., Ltd., Shenzhen, Guangdong 518129 (CN)
(72) Inventor: HU, Yajie, Shenzhen, Guangdong 518129 (CN); YANG, Yanmei, Shenzhen, Guangdong 518129 (CN)
(74) Representative: Körber, Martin Hans
(86) International application number: PCT/CN2023/073717
(87) International publication number: WO 2023/143574

(57) **Abstract**

Embodiments of this application provide a device selection method and apparatus. The method includes: A first edge enabler server EES receives, from a second EES, information for requesting to determine a first edge application server EAS for a terminal device UE served by the second EES. Then, the first EES may determine the first EAS based on at least one of a public land mobile network identity corresponding to the UE or an edge computing service provider identity corresponding to the UE. Finally, the EES sends information about the first EAS to the UE based on the first EAS. Further, in some scenarios (for example, across operators or across edge computing service providers), in a process in which the UE performs context relocation, the first EAS selected by the first EES for the UE supports a service of the UE, to avoid a problem that application context relocation of the UE fails and the service is affected because an EAS obtained by the first EES cannot satisfy the service of the UE.

## Description

This application claims priority to Chinese Patent Application No. 202210114818.0, filed with the China National Intellectual Property Administration on January 30, 2022 and entitled "DEVICE SELECTION METHOD AND APPARATUS", which is incorporated herein by reference in its entirety.

### TECHNICAL FIELD

This application relates to the communication field, and more specifically, to a device selection method and apparatus.

### BACKGROUND

To meet a service requirement, a user may request a home operator, and request, through a joint interface between the home operator and another operator, the another operator (for example, a target operator) to deploy some devices or applications (for example, at least one edge enabler server (Edge Enabler Server, EES) or at least one edge application server (edge application server, EAS)), where a network location of the at least one EAS is deployed in a network of the another operator (for example, the target operator).

However, in some scenarios (for example, across operators or across ECSPs), in a process in which UE performs context relocation, it is difficult to ensure that the some devices or applications deployed by the another operator (for example, the target operator) for the user have a capability of providing a roaming service requirement for the user. Consequently, user experience is greatly affected.

### SUMMARY

Embodiments of this application provide a device selection method and apparatus. Further, in some scenarios (for example, across operators or across ECSPs), a first EAS selected by a first EES for UE supports a service of the UE, to avoid a problem that application context relocation of the UE fails and the service is affected because an EAS obtained by the first EES cannot satisfy the service of the UE, and improve user experience.

According to a first aspect, a device selection method is provided. The method includes: A first edge enabler server EES receives, from a second EES, information for requesting to determine a first edge application server EAS for a terminal device UE served by the second EES. After the first EES receives the information for requesting to determine the first edge application server EAS for the UE served by the second EES, the first EES determines the first EAS based on at least one of a public land mobile network identity (Public land mobile network identity, PLMN ID) corresponding to the UE or an edge computing service provider identity (Edge computing service provider identity, ECSP ID) corresponding to the UE. The first EES sends information about the first EAS to the second EES.

The information about the first EAS may include at least one of identification information of the first EAS, endpoint information (for example, an endpoint address such as a uniform resource identifier, an internet protocol, or a fully qualified domain name) of the first EAS, a PLMN ID of the first EAS, or an ECSP ID of the first EAS. The first EAS may include one or more EASs.

In an implementation, the second EES may send a service discovery request message to the first EES, where the service discovery request message includes the information for requesting to determine the first EAS for the UE.

Optionally, the service discovery request message may further include location information of the UE, identity information of the UE, and application client profile (AC profile) information.

In addition, the first EES may further determine, based on the location information of the UE and an EAS discovery filter (EAS discovery filter), an EAS associated with the first EES, send information about the EAS associated with the first EES to the second EES, and further send, to the second EES, information indicating whether each EAS associated with the first EES supports in serving a roaming terminal device, and at least one of a PLMN ID corresponding to each EAS or an ECSP ID corresponding to each EAS. After receiving the foregoing information, the second EES may determine the first EAS based on at least one of the PLMN ID corresponding to the UE or the ECSP ID corresponding to the UE.

If each EAS associated with the first EES has no capability of serving the UE, the first EES sends failure information to the second EES, where the failure information indicates that no EAS has a capability of serving the UE. Optionally, the failure information may carry a failure cause indication indicating that no EAS can serve the UE.

It should be understood that, in embodiments of this application, a first ECS may be an ECS in a roaming network of the UE, the first EES may be an EES associated with the first ECS, the first EAS may be an EAS associated with the first EES, a second ECS may be an ECS in a home network of the UE, the second EES may be an EES associated with the second ECS, and the second EAS may be an EAS associated with the second EES.

Based on the foregoing solution, after receiving the information for requesting to determine the first EAS for the UE, the first EES determines the first EAS based on at least one of the PLMN ID corresponding to the UE or the ECSP ID corresponding to the UE, and sends the information about the first EAS to the second EES. Further, in some scenarios (for example, across operators or across ECSPs), in a process in which the UE performs context relocation, the first EAS selected by the first EES for the UE supports a service of the UE, to avoid a problem that application context relocation of the UE fails and the service is affected because an EAS obtained by the first EES cannot satisfy the service of the UE, and improve user experience.

With reference to the first aspect, in some implementations of the first aspect, that the first EES determines the first EAS based on at least one of a PLMN ID corresponding to the UE or an ECSP ID corresponding to the UE includes at least one of the following manners: The first EES determines the first EAS based on a PLMN ID corresponding to an EAS associated with the first EES or the PLMN ID of the UE; or the first EES determines the first EAS based on an ECSP ID corresponding to an EAS associated with the first EES or the ECSP ID of the UE, where the first EAS is an EAS associated with the first EES.

With reference to the first aspect, in some implementations of the first aspect, the first EES sends, to the first edge configuration server ECS, at least one of the following information: the PLMN ID corresponding to the first EAS, the ECSP ID corresponding to the first EAS, a PLMN ID corresponding to the first EES, or an ECSP ID corresponding to the first EES.

With reference to the first aspect, in some implementations of the first aspect, when the at least one piece of information includes at least one of the PLMN ID corresponding to the first EES or the ECSP ID corresponding to the first EES, the method further includes at least one of the following: The first EES determines, based on the PLMN ID corresponding to the first EAS, the PLMN ID corresponding to the first EES; or the first EES determines, based on the ECSP ID corresponding to the first EAS, the ECSP ID corresponding to the first EES.

The at least one of the foregoing information may identify whether the first EAS can serve roaming UE, whether the first EAS can serve a user of a cooperative ECSP, whether the first EES can serve roaming UE, whether the first EES can serve a user of a cooperative ECSP, or whether the EAS associated with the first EES can serve roaming UE or serve a user of a cooperative ECSP.

In an implementation, the first EES may send a service registration request message to the first ECS, where the service registration request message includes the at least one of the foregoing information.

In addition, the at least one of the foregoing information may alternatively be carried in any other message between the first EES and the first ECS. This is not limited herein in this application.

Optionally, the first ECS may send at least one of a PLMN supported by the first ECS or an ECSP supported by the first ECS to the second ECS. Further, the first ECS may further send at least one of the PLMN ID corresponding to the first EES, the ECSP ID corresponding to the first EES, the PLMN ID corresponding to the first EAS, or the ECSP ID corresponding to the first EAS to the second ECS.

With reference to the first aspect, in some implementations of the first aspect, the first EES receives at least one of the PLMN ID corresponding to the UE or the ECSP ID corresponding to the UE from a core network element.

Specifically, the first EES may subscribe to a PLMN change (change) event from a 5G core network (5GC), that is, the first EES may subscribe to information about the PLMN change event from a session management function (Session management function, SMF) network element, or the first EES may subscribe to the PLMN change event from the SMF via a network element function (Network element function, NEF) network element. Then, when the SMF detects the PLMN change event of the UE, the SMF may send a PLMN change event notification message to the first EES, where the PLMN change event notification message may carry at least one of a UE home PLMN or a UE serving PLMN.

Further, the first EES may obtain ECSP information of the UE from a unified data management (Unified data management, UDM) network element via the SMF.

With reference to the first aspect, in some implementations of the first aspect, the information for requesting to determine the first EAS for the UE includes at least one of the PLMN ID corresponding to the UE or the ECSP ID corresponding to the UE.

With reference to the first aspect, in some implementations of the first aspect, the first EES receives at least one of the PLMN ID corresponding to the first EAS or the ECSP ID corresponding to the first EAS from the first EAS.

The information may identify whether the first EAS can serve the roaming UE, or whether the first EAS can serve the user of the cooperative ECSP.

In a possible implementation, the first EAS may send an EAS registration request message (EAS registration (update) request) to the first EES, where the EAS registration request message carries at least one of the PLMN ID corresponding to the first EAS or the ECSP ID corresponding to the first EAS. Further, the foregoing information may be stored in an EAS profile (EAS profile).

With reference to the first aspect, in some implementations of the first aspect, the first EAS sends at least one of the PLMN ID corresponding to the first EAS or the ECSP ID corresponding to the first EAS to the first EES.

Optionally, after receiving the registration request message, the first EES may store information included in the registration request message, and send a registration (update) response message to the first EAS.

According to a second aspect, a device selection method is provided. The method includes: A first ECS receives, from a second EES or a second ECS, information for requesting to determine a first EES for UE. After the first ECS receives, from the second EES or the second ECS, the information for requesting to determine the first EES for the UE, the first ECS determines the first EES based on at least one of a PLMN ID corresponding to the UE or an ECSP ID corresponding to the UE. The first ECS sends information about the first EES to the second ECS.

The information about the first EES may include identification information of the first EES, endpoint information (for example, an endpoint address such as a uniform resource identifier of the first EES, an internet protocol of the first EES, or a fully qualified domain name of the first EES) of the first EES, a service range of the first EES, a data network access identifier of the first EES, and other information.

Optionally, the information about the first EES may further include at least one of identification information of an EAS associated with the first EES, endpoint information (for example, an endpoint address such as a uniform resource identifier, an internet protocol, or a fully qualified domain name) of the EAS associated with the first EES, a PLMN ID of the EAS associated with the first EES, or an ECSP ID of the EAS associated with the first EES.

Further, the first EES may include one or more first EESs.

In an implementation, the second EES or the second ECS may send a service provisioning request message to the first ECS, where the service provisioning request message may include the information for requesting to determine the first EES for the UE.

In an implementation, the first ECS may send a service provisioning response message to the second ECS, where the service provisioning response message may include the information about the first EES.

It should be understood that, if the first ECS determines that no EES supports a service of the UE, the first ECS may return failure indication information and a failure cause to the second EES, to indicate that no EES can support the service of the UE.

Based on the foregoing solution, after receiving the information for determining the first EES for the UE, the first ECS determines the first EES based on at least one of the PLMN ID corresponding to the UE or the ECSP ID corresponding to the UE, and sends the information about the first EES to the second ECS. Further, in some scenarios (for example, across operators or across ECSPs), in a process in which the UE performs context relocation, the first EES selected by the first ECS for the UE supports the service of the UE, to avoid a problem that application context relocation of the UE fails and the service is affected because the first EES obtained by the first ECS cannot satisfy the service of the UE and an EAS that is further selected cannot satisfy the service of the UE, and improve user experience.

In addition, if determining that no EES supports the service of the UE, the first ECS may return failure indication information to the UE. Further, it is avoided that the UE still initiates a service when no EES supports the service of the UE.

With reference to the second aspect, in some implementations of the second aspect, that the first ECS determines the first EES based on at least one of a PLMN ID corresponding to the UE and an ECSP ID corresponding to the UE includes at least one of the following manners: The first ECS determines the first EES based on the PLMN ID corresponding to the UE and a PLMN ID corresponding to the first EES, or the first ECS determines the first EES based on the ECSP ID corresponding to the UE and an ECSP ID corresponding to the first EES.

With reference to the second aspect, in some implementations of the second aspect, that the first ECS determines the first EES based on at least one of the PLMN ID corresponding to the UE or a PLMN ID corresponding to the first EES includes: The first ECS determines the first EES based on the PLMN ID corresponding to the UE, the PLMN ID corresponding to the first EES, and a capability of the EAS associated with the first EES.

With reference to the second aspect, in some implementations of the second aspect, that the first ECS determines the first EES based on at least one of the ECSP ID corresponding to the UE or an ECSP ID corresponding to the first EES includes: The first ECS determines the first EES based on the ECSP ID corresponding to the UE, the ECSP ID corresponding to the first EES, and a capability of the EAS associated with the first EES.

The capability of the EAS associated with the first EES may include at least one of the PLMN ID corresponding to the EAS associated with the first EES or the ECSP ID corresponding to the EAS associated with the first EES.

With reference to the second aspect, in some implementations of the second aspect, the first ECS receives, from the second EES, information for requesting to determine the first EAS for the UE, where the first EAS is an EAS associated with the first EES. After the first ECS receives the information for determining the first EAS for the UE, the first ECS determines the first EAS based on at least one of the PLMN ID corresponding to the UE or the ECSP ID corresponding to the UE. The first ECS sends information about the first EAS to the second EES.

The information about the first EAS may include at least one of identification information of the first EAS, endpoint information (for example, an endpoint address such as a uniform resource identifier, an internet protocol, or a fully qualified domain name) of the first EAS, a PLMN ID of the first EAS, or an ECSP ID of the first EAS. The first EAS may include one or more EASs.

For example, the information for requesting to determine the first EAS for the UE may include at least one of the PLMN ID corresponding to the UE or the ECSP ID corresponding to the UE.

In an implementation, the second EES may send a service discovery request message to the first ECS, where the service discovery request message may include the information for requesting to determine the first EAS for the UE.

In an implementation, the first ECS may send a service discovery response message to the second EES, where the service discovery response message may include the information about the first EAS.

Based on the foregoing solution, after receiving the information for requesting to determine the first EAS for the UE, the first ECS determines the first EAS based on at least one of the PLMN ID corresponding to the UE or the ECSP ID corresponding to the UE, and sends the information about the first EAS to the second EES. Further, in some scenarios (for example, across operators or across ECSPs), in a process in which the UE performs context relocation, the first EAS selected by the first ECS for the UE supports the service of the UE, to avoid a problem that application context relocation of the UE fails and the service is affected because an EAS obtained by the first ECS cannot satisfy the service of the UE, and improve user experience.

With reference to the second aspect, in some implementations of the second aspect, that the first ECS determines the first EAS based on at least one of the PLMN ID corresponding to the UE or the ECSP ID corresponding to the UE includes at least one of the following manners: The first ECS determines the first EAS based on the PLMN ID corresponding to the UE and the PLMN ID corresponding to the EAS associated with the first EES, or the first ECS determines the first EAS based on the ECSP ID corresponding to the UE and the ECSP ID corresponding to the EAS associated with the first EES.

With reference to the second aspect, in some implementations of the second aspect, the first ECS receives at least one of the following information from the first EES: the PLMN ID corresponding to the first EAS, the ECSP ID corresponding to the first EAS, the PLMN ID corresponding to the first EES, or the ECSP ID corresponding to the first EES.

In an implementation, the first EES may send a service registration request message to the first ECS, where the service registration request message includes at least one of the foregoing information.

In addition, the at least one of the foregoing information may alternatively be carried in any other message between the first EES and the first ECS. This is not limited herein in this application.

Further, the first ECS may send a registration (update) response message to the first EES.

With reference to the second aspect, in some implementations of the second aspect, the information for requesting to determine the first EES for the UE includes at least one of the PLMN ID corresponding to the UE or the ECSP ID corresponding to the UE.

According to a third aspect, a device selection method is provided. The method including: A first ECS receives, from a second EES, information for requesting to determine a first EAS for UE. After the first ECS receives the information for requesting to determine the first EAS for the UE, the first ECS determines the first EAS based on at least one of a PLMN ID corresponding to the UE or an ECSP ID corresponding to the UE. The first ECS sends information about the first EAS to the second EES.

The information about the first EAS may include at least one of identification information of the first EAS, endpoint information (for example, an endpoint address such as a uniform resource identifier, an internet protocol, or a fully qualified domain name) of the first EAS, a PLMN ID of the first EAS, or an ECSP ID of the first EAS. The first EAS may include one or more EASs.

For example, the information for requesting to determine the first EAS for the UE may include at least one of information about the PLMN ID corresponding to the UE or information about the ECSP ID corresponding to the UE.

In an implementation, the second EES may send a service discovery request message to the first ECS, where the service discovery request message includes the information for requesting to determine the first EAS for the UE.

Optionally, the service discovery request message may further include location information of the UE, identity information of the UE, and application client profile (AC profile) information.

In addition, if the first ECS determines that no EAS has a capability of serving the UE, the first ECS sends failure information to the second EES, where the failure information indicates that no EAS has the capability of serving the UE. Optionally, the failure information may carry a failure cause indication indicating that no EAS can serve the UE.

Based on the foregoing solution, for beneficial effects, refer to related descriptions of the second aspect. For brevity, details are not described herein in this application.

With reference to the third aspect, in some implementations of the third aspect, that the first ECS determines the first EAS based on at least one of a PLMN ID corresponding to the UE or an ECSP ID corresponding to the UE includes at least one of the following manners: The first ECS determines the first EAS based on the PLMN ID corresponding to the UE and a PLMN ID corresponding to an EAS associated with a first EES, or the first ECS determines the first EAS based on the ECSP ID corresponding to the UE and an ECSP ID corresponding to an EAS associated with a first EES, where, the first EAS is an EAS associated with the first EES.

With reference to the third aspect, in some implementations of the third aspect, the first ECS receives, from the second EES or a second ECS, information for requesting to determine the first EES for the UE. After the first ECS receives the information for requesting to determine the first EES for the UE, the first ECS determines the first EES based on at least one of the PLMN ID corresponding to the UE or the ECSP ID corresponding to the UE. The first ECS sends information about the first EES to the second ECS.

For example, the information for requesting to determine the first EES for the UE may include one of the PLMN ID corresponding to the first EAS, the ECSP ID corresponding to the first EAS, a PLMN ID corresponding to the first EES, or an ECSP ID corresponding to the first EES.

The information about the first EES may include identification information of the first EES, endpoint information (for example, an endpoint address such as a uniform resource identifier of the EES, an internet protocol of the EES, or a fully qualified domain name of the EES) of the EES, a service range of the EES, a data network access identifier of the EES, and other information.

Optionally, the information about the EES may further include at least one of identification information of the EAS associated with the EES, endpoint information (for example, an endpoint address such as a uniform resource identifier, an internet protocol, or a fully qualified domain name) of the EAS associated with the EES, a PLMN ID of the EAS associated with the EES, or an ECSP ID of the EAS associated with the EES.

Further, the first EES may include one or more first EESs.

In an implementation, the second EES or the second ECS may send a service provisioning request message to the first ECS, where the service provisioning request message may include the information for requesting to determine the first EES for the UE.

In an implementation, the first ECS may send a service provisioning response message to the second ECS, where the service provisioning response message may include the information about the first EES.

It should be understood that, if the first ECS determines that no EES supports a service of the UE, the first ECS may return failure indication information and a failure cause to the second EES, to indicate that no EES can support the service of the UE.

Based on the foregoing solution, for beneficial effects, refer to related descriptions of the second aspect. For brevity, details are not described herein in this application.

With reference to the third aspect, in some implementations of the third aspect, that the first ECS determines the first EES based on at least one of the PLMN ID corresponding to the UE or the ECSP ID corresponding to the UE includes at least one of the following manners: The first ECS determines the first EES based on the PLMN ID corresponding to the UE and the PLMN ID corresponding to the first EES, or the first ECS determines the first EES based on the ECSP ID corresponding to the UE and the ECSP ID corresponding to the first EES.

With reference to the third aspect, in some implementations of the third aspect, that the first ECS determines the first EES based on the PLMN ID corresponding to the UE and the PLMN ID corresponding to the first EES includes: The first ECS determines the first EES based on the PLMN ID corresponding to the UE, the PLMN ID corresponding to the first EES, and a capability of the EAS associated with the first EES.

With reference to the third aspect, in some implementations of the third aspect, that the first ECS determines the first EES based on the ECSP ID corresponding to the UE and the ECSP ID corresponding to the first EES includes: The first ECS determines the first EES based on the ECSP ID corresponding to the UE, the ECSP ID corresponding to the first EES, and a capability of the EAS associated with the first EES.

The capability of the EAS associated with the EES may include at least one of the PLMN ID corresponding to the EAS associated with the EES or the ECSP ID corresponding to the EAS associated with the EES.

The first ECS receives one of the PLMN ID corresponding to the first EES or the ECSP ID corresponding to the first EES from the first EES.

Optionally, the first ECS may further receive at least one of the PLMN ID corresponding to the first EAS or the ECSP ID corresponding to the first EAS from the first EES.

With reference to the third aspect, in some implementations of the third aspect, the information for requesting to determine the first EAS for the UE includes at least one of the PLMN ID corresponding to the UE or the ECSP ID corresponding to the UE.

According to a fourth aspect, a device selection method is provided. The method including: A second ECS receives, from a second EES, information for requesting to determine a first EES for UE. After the second ECS receives the information for requesting to determine the first EES for the UE, the second ECS determines the first EES based on at least one of a PLMN ID corresponding to the UE or an ECSP ID corresponding to the UE. The second ECS sends information about the first EES to the second EES.

For example, the information for requesting to determine the first EES for the UE may include at least one of the PLMN ID corresponding to the UE or the ECSP ID corresponding to the UE.

The information about the first EES may include identification information of the first EES, endpoint information (for example, an endpoint address such as a uniform resource identifier of the first EES, an internet protocol of the first EES, or a fully qualified domain name of the first EES) of the first EES, a service range of the first EES, a data network access identifier of the first EES, and other information.

Optionally, the information about the first EES may further include at least one of identification information of an EAS associated with the first EES, endpoint information (for example, an endpoint address such as a uniform resource identifier, an internet protocol, or a fully qualified domain name) of the EAS associated with the first EES, a PLMN ID of the EAS associated with the first EES, or an ECSP ID of the EAS associated with the first EES.

Further, the first EES may include one or more first EESs.

In an implementation, the second EES may send a service provisioning request message to the second ECS, where the service provisioning request message may include the information for requesting to determine the first EES for the UE.

In an implementation, the second ECS may send a service provisioning response message to the second EES, where the service provisioning response message may include the information about the first EES.

It should be understood that, if the second ECS determines that no EES supports a service of the UE, the second ECS may return failure indication information and a failure cause to the second EES, to indicate that no EES can support the service of the UE.

Based on the foregoing solution, for beneficial effects, refer to related descriptions of the second aspect. For brevity, details are not described herein in this application.

With reference to the fourth aspect, in some implementations of the fourth aspect, that the second ECS determines the first EES based on at least one of a PLMN ID corresponding to the UE or an ECSP ID corresponding to the UE includes at least one of the following manners: The second ECS determines the first EES based on the PLMN ID corresponding to the UE and a PLMN ID corresponding to the first EES, or the second ECS determines the first EES based on the ECSP ID corresponding to the UE and an ECSP ID corresponding to the first EES.

With reference to the fourth aspect, in some implementations of the fourth aspect, that the second ECS determines the first EES based on the PLMN ID corresponding to the UE or a PLMN ID corresponding to the first EES includes: The second ECS determines the first EES based on the PLMN ID corresponding to the UE, the PLMN ID corresponding to the first EES, and a capability of the EAS associated with the first EES.

With reference to the fourth aspect, in some implementations of the fourth aspect, that the second ECS determines the first EES based on the ECSP ID corresponding to the UE and an ECSP ID corresponding to the first EES includes: The second ECS determines the first EES based on the ECSP ID corresponding to the UE, the ECSP ID corresponding to the first EES, and a capability of the EAS associated with the first EES.

The capability of the EAS associated with the first EES may include at least one of the PLMN ID corresponding to the EAS associated with the first EES or the ECSP ID corresponding to the EAS associated with the first EES.

With reference to the fourth aspect, in some implementations of the fourth aspect, the second ECS receives, from the second EES, information for requesting to determine a first EAS for the UE. After the second ECS receives the information for requesting to determine the first EAS for the UE, the second ECS determines the first EAS based on at least one of the PLMN ID corresponding to the UE or the ECSP ID corresponding to the UE. The second ECS sends information about the first EAS to the second EES.

The information about the first EAS may include at least one of identification information of the first EAS, endpoint information (for example, an endpoint address such as a uniform resource identifier, an internet protocol, or a fully qualified domain name) of the first EAS, a PLMN ID of the first EAS, or an ECSP ID of the first EAS. The first EAS may include one or more EASs. For example, the information for requesting to determine the first EAS for the UE may include at least one of a PLMN ID corresponding to the first EAS, an ECSP ID corresponding to the first EAS, the PLMN ID corresponding to the first EES received by the second ECS from the first ECS, or the ECSP ID corresponding to the first EES.

In an implementation, the second EES may send a service discovery request message to the second ECS, where the service discovery request message may include the information for requesting to determine the first EAS for the UE.

In an implementation, the second ECS may send a service discovery response message to the second EES, where the service discovery response message may include the information about the first EAS.

In addition, if the second ECS determines that no EAS has a capability of serving the UE, the second ECS sends failure information to the second EES, where the failure information indicates that no EAS has the capability of serving the UE. Optionally, the failure information may carry a failure cause indication indicating that no EAS can serve the UE.

Based on the foregoing solution, for beneficial effects, refer to related descriptions of the second aspect. For brevity, details are not described herein in this application.

With reference to the fourth aspect, in some implementations of the fourth aspect, that the second ECS determines the first EAS based on at least one of the PLMN ID corresponding to the UE or the ECSP ID corresponding to the UE includes at least one of the following manners: The second ECS determines the first EAS based on the PLMN ID corresponding to the EAS associated with the first EES and the PLMN ID corresponding to the UE; or the second ECS determines the first EAS based on the ECSP ID corresponding to the EAS associated with the first EES and the ECSP ID corresponding to the UE, where the first EAS is an EAS associated with the first EES.

With reference to the fourth aspect, in some implementations of the fourth aspect, the second ECS receives, from the first ECS, at least one of the PLMN ID corresponding to the EAS associated with the first EES or the ECSP ID corresponding to the EAS associated with the first EES, where the first EES is an EES associated with the first ECS.

Optionally, the second ECS may further receive at least one of the PLMN ID corresponding to the first EAS or the ECSP ID corresponding to the first EAS from the first ECS.

With reference to the fourth aspect, in some implementations of the fourth aspect, the information for requesting to determine the first EES for the UE includes at least one of the PLMN ID corresponding to the UE or the ECSP ID corresponding to the UE.

According to a fifth aspect, a device selection method is provided. The method including: A second ECS receives, from a second EES, information for requesting to determine a first EAS for UE. After the second ECS receives the information for requesting to determine the first EAS for the UE, the second ECS determines the first EAS based on at least one of a PLMN ID corresponding to the UE and an ECSP ID corresponding to the UE. The second ECS sends information about the first EAS to the second EES.

The information about the first EAS may include at least one of identification information of the first EAS, endpoint information (for example, an endpoint address such as a uniform resource identifier, an internet protocol, or a fully qualified domain name) of the first EAS, a PLMN ID of the first EAS, or an ECSP ID of the first EAS. The first EAS may include one or more EASs.

Specifically, the information for requesting to determine the first EAS for the UE may include at least one of information about the PLMN ID corresponding to the UE or information about the ECSP ID corresponding to the UE.

In an implementation, the second EES may send a service discovery request message to the second ECS, where the service discovery request message includes the information for requesting to determine the first EAS for the UE.

Optionally, the service discovery request message may further include location information of the UE, identity information of the UE, and application client profile (AC profile) information.

In addition, if the second ECS determines that no EAS has a capability of serving the UE, the second ECS sends failure information to the second EES, where the failure information indicates that no EAS has the capability of serving the UE. Optionally, the failure information may carry a failure cause indication indicating that no EAS can serve the UE.

Based on the foregoing solution, for beneficial effects, refer to related descriptions of the second aspect. For brevity, details are not described herein in this application.

With reference to the fifth aspect, in some implementations of the fifth aspect, the second ECS receives, from the second EES, the information for requesting to determine the first EAS for the UE. After the second ECS receives the information for requesting to determine the first EAS for the UE, the second ECS determines the first EAS based on at least one of the PLMN ID corresponding to the UE or the ECSP ID corresponding to the UE. The second ECS sends the information about the first EAS to the second EES.

With reference to the fifth aspect, in some implementations of the fifth aspect, that the second ECS determines the first EAS based on at least one of the PLMN ID corresponding to the UE or the ECSP ID corresponding to the UE includes at least one of the following manners: The second ECS determines the first EAS based on a PLMN ID corresponding to an EAS associated with a first EES and the PLMN ID corresponding to the UE; or the second ECS determines the first EAS based on an ECSP ID corresponding to an EAS associated with a first EES and the ECSP ID corresponding to the UE, where the first EAS is an EAS associated with the first EES.

With reference to the fifth aspect, in some implementations of the fifth aspect, the second ECS receives, from the second EES, information for requesting to determine the first EES for the UE. After the second ECS receives the information for requesting to determine the first EES for the UE, the second ECS determines the first EES based on at least one of the PLMN ID corresponding to the UE or the ECSP ID corresponding to the UE. The second ECS sends information about the first EES to the second EES based on the first EES.

The information about the first EES may include identification information of the first EES, endpoint information (for example, an endpoint address such as a uniform resource identifier of the first EES, an internet protocol of the first EES, or a fully qualified domain name of the first EES) of the first EES, a service range of the first EES, a data network access identifier of the first EES, and other information.

Optionally, the information about the first EES may further include at least one of identification information of an EAS associated with the first EES, endpoint information (for example, an endpoint address such as a uniform resource identifier, an internet protocol, or a fully qualified domain name) of the EAS associated with the first EES, a PLMN ID of the EAS associated with the first EES, or an ECSP ID of the EAS associated with the first EES.

Further, the first EES may include one or more first EESs.

In an implementation, the second EES may send a service provisioning request message to the second ECS, where the service provisioning request message may include the information for requesting to determine the first EES for the UE.

In an implementation, the second ECS may send a service provisioning response message to the second EES, where the service provisioning response message may include the information about the first EES.

It should be understood that, if the second ECS determines that no EES supports a service of the UE, the second ECS may return failure indication information and a failure cause to the second EES, to indicate that no EES can support the service of the UE.

Based on the foregoing solution, for beneficial effects, refer to related descriptions of the second aspect. For brevity, details are not described herein in this application.

With reference to the fifth aspect, in some implementations of the fifth aspect, that the second ECS determines the first EES based on at least one of the PLMN ID corresponding to the UE or the ECSP ID corresponding to the UE includes at least one of the following manners: The second ECS determines the first EES based on the PLMN ID corresponding to the UE and a PLMN ID corresponding to the first EES, or the second ECS determines the first EES based on the ECSP ID corresponding to the UE and an ECSP ID corresponding to the first EES.

With reference to the fifth aspect, in some implementations of the fifth aspect, that the second ECS determines the first EES based on the PLMN ID corresponding to the UE and a PLMN ID corresponding to the first EES includes: The second ECS determines the first EES based on the PLMN ID corresponding to the UE, the PLMN ID corresponding to the first EES, and a capability of the EAS associated with the first EES.

With reference to the fifth aspect, in some implementations of the fifth aspect, that the second ECS determines the first EES based on the ECSP ID corresponding to the UE and an ECSP ID corresponding to the first EES includes: The second ECS determines the first EES based on the ECSP ID corresponding to the UE, the ECSP ID corresponding to the first EES, and a capability of the EAS associated with the first EES.

The capability of the EAS associated with the first EES may include at least one of the PLMN ID corresponding to the EAS associated with the first EES or the ECSP ID corresponding to the EAS associated with the first EES.

With reference to the fifth aspect, in some implementations of the fifth aspect, the second ECS receives at least one of the PLMN ID corresponding to the first EES or the ECSP ID corresponding to the first EES from a first ECS, where the first EES is an EES associated with the first ECS.

Optionally, the second ECS may further receive at least one of the PLMN ID corresponding to the first EAS or the ECSP ID corresponding to the first EAS from the first ECS.

With reference to the fifth aspect, in some implementations of the fifth aspect, the information for requesting to determine the first EAS for the UE includes at least one of the PLMN ID corresponding to the UE or the ECSP ID corresponding to the UE.

According to a sixth aspect, a device selection method is provided. The method including: A second EES sends, to a first ECS or a second ECS, information for requesting to determine a first EES for UE served by the second EES. The second EES receives, from the first ECS or the second ECS, information for determining the first EES for the UE. After the second EES receives the information for requesting to determine the first EES for the UE, the second EES determines the first EES based on at least one of a PLMN ID corresponding to the UE or an ECSP ID corresponding to the UE.

The EES may include one or more EESs.

Based on the foregoing solution, for beneficial effects, refer to related descriptions of the second aspect. For brevity, details are not described herein in this application.

With reference to the sixth aspect, in some implementations of the sixth aspect, that the second EES determines the first EES based on at least one of a PLMN ID corresponding to the UE or an ECSP ID corresponding to the UE includes at least one of the following manners: The second EES determines the first EES based on the PLMN ID corresponding to the UE and a PLMN ID corresponding to the first EES, or the second EES determines the first EES based on the ECSP ID corresponding to the UE and an ECSP ID corresponding to the first EES.

With reference to the sixth aspect, in some implementations of the sixth aspect, that the second EES determines the first EES based on the PLMN ID corresponding to the UE and a PLMN ID corresponding to the first EES includes: The second EES determines the first EES based on the PLMN ID corresponding to the UE, the PLMN ID corresponding to the first EES, and a capability of an EAS associated with the first EES.

With reference to the sixth aspect, in some implementations of the sixth aspect, that the second EES determines the first EES based on the ECSP ID corresponding to the UE and an ECSP ID corresponding to the first EES includes: The second EES determines the first EES based on the ECSP ID corresponding to the UE, the ECSP ID corresponding to the first EES, and a capability of an EAS associated with the first EES.

The capability of the EAS associated with the first EES may include at least one of a PLMN ID corresponding to the EAS associated with the first EES or an ECSP ID corresponding to the EAS associated with the first EES.

With reference to the sixth aspect, in some implementations of the sixth aspect, the information for determining the first EES for the UE includes at least one of the PLMN ID corresponding to the first EES or the ECSP ID corresponding to the first EES.

With reference to the sixth aspect, in some implementations of the sixth aspect, the second EES sends information for requesting to determine a first EAS for the UE to the first ECS, the second ECS, or the first EES. The second EES receives, from the first ECS, the second ECS, or the first EES, information for determining the first EAS for the UE. After the second EES receives the information for determining the first EAS for the UE, the second EES determines the first EAS based on at least one of the PLMN ID corresponding to the UE or the ECSP ID corresponding to the UE.

Based on the foregoing solution, for beneficial effects, refer to related descriptions of the second aspect. For brevity, details are not described herein in this application.

With reference to the sixth aspect, in some implementations of the sixth aspect, that the second EES determines the first EAS based on at least one of the PLMN ID corresponding to the UE or the ECSP ID corresponding to the UE includes at least one of the following manners: The second EES determines the first EAS based on the PLMN ID corresponding to the EAS associated with the first EES and the PLMN ID corresponding to the UE; or the second EES determines the first EAS based on the ECSP ID corresponding to the EAS associated with the first EES and the ECSP ID corresponding to the UE, where the first EAS is an EAS associated with the first EES.

The first EAS may include one or more EASs.

With reference to the sixth aspect, in some implementations of the sixth aspect, the information for determining the first EAS for the UE includes at least one of the PLMN ID corresponding to the EAS associated with the first EES or the ECSP ID corresponding to the EAS associated with the first EES.

Optionally, the information for determining the first EAS for the UE may further include at least one of a PLMN ID corresponding to the first EAS or an ECSP ID corresponding to the first EAS.

With reference to the sixth aspect, in some implementations of the sixth aspect, the information for requesting to determine the first EES for the UE includes at least one of the PLMN ID corresponding to the UE or the ECSP ID corresponding to the UE.

With reference to the sixth aspect, in some implementations of the sixth aspect, the second EES obtains at least one of the PLMN ID corresponding to the UE and the ECSP ID corresponding to the UE.

With reference to the sixth aspect, in some implementations of the sixth aspect, that the second EES obtains at least one of the PLMN ID corresponding to the UE or the ECSP ID corresponding to the UE includes: The second EES receives at least one of the PLMN ID corresponding to the UE or the ECSP ID corresponding to the UE from a core network element or a second EAS, where the second EAS is an EAS associated with the second EES.

With reference to the sixth aspect, in some implementations of the sixth aspect, when the second EES receives at least one of the PLMN ID corresponding to the UE or the ECSP ID corresponding to the UE from the core network element, the method further includes: The second EES sends at least one of the PLMN ID corresponding to the UE or the ECSP ID corresponding to the UE to the second EAS.

According to a seventh aspect, a device selection method is provided. The method including: A second EES sends, to a first ECS, a second ECS, or a first EES, information for requesting to determine a first EAS for UE served by the second EES, where the first EAS is an EAS associated with the first EES. The second EES receives, from the first ECS, the second ECS, or the first EES, information for determining the first EAS for the UE. After the second EES receives the information for determining the first EAS for the UE, the second EES determines the first EAS based on at least one of a PLMN ID corresponding to the UE or an ECSP ID corresponding to the UE.

The first EAS may include one or more EASs.

Based on the foregoing solution, for beneficial effects, refer to related descriptions of the second aspect. For brevity, details are not described herein in this application.

With reference to the seventh aspect, in some implementations of the seventh aspect, that the second EES determines the first EAS based on at least one of a PLMN ID corresponding to the UE or an ECSP ID corresponding to the UE includes at least one of the following manners: The second EES determines the first EAS based on a PLMN ID corresponding to an EAS associated with the first EES and the PLMN ID corresponding to the UE; or the second EES determines the first EAS based on an ECSP ID corresponding to an EAS associated with the first EES and the ECSP ID corresponding to the UE.

With reference to the seventh aspect, in some implementations of the seventh aspect, when the second EES sends, to the first ECS or the second ECS, the information for requesting to determine the first EAS for the UE, the second EES sends, to the first ECS or the second ECS, information for requesting to determine the EES for the UE. The second EES receives, from the first ECS or the second ECS, the information for determining the first EES for the UE. After the second EES receives the information for determining the first EES for the UE, the second EES determines the first EES based on at least one of the PLMN ID corresponding to the UE or the ECSP ID corresponding to the UE.

The EES may include one or more EESs.

Based on the foregoing solution, for beneficial effects, refer to related descriptions of the second aspect. For brevity, details are not described herein in this application.

With reference to the seventh aspect, in some implementations of the seventh aspect, that the second EES determines the first EES based on at least one of the PLMN ID corresponding to the UE or the ECSP ID corresponding to the UE includes at least one of the following manners: The second EES determines the first EES based on the PLMN ID corresponding to the UE and a PLMN ID corresponding to the first EES, or the second EES determines the first EES based on the ECSP ID corresponding to the UE and an ECSP ID corresponding to the first EES.

With reference to the seventh aspect, in some implementations of the seventh aspect, that the second EES determines the first EES based on the PLMN ID corresponding to the UE and a PLMN ID corresponding to the first EES includes: The second EES determines the first EES based on the PLMN ID corresponding to the UE, the PLMN ID corresponding to the first EES, and a capability of the EAS associated with the first EES.

With reference to the seventh aspect, in some implementations of the seventh aspect, that the second EES determines the first EES based on the ECSP ID corresponding to the UE and an ECSP ID corresponding to the first EES includes: The second EES determines the first EES based on the ECSP ID corresponding to the UE, the ECSP ID corresponding to the first EES, and a capability of the EAS associated with the first EES.

The capability of the EAS associated with the first EES may include at least one of the PLMN ID corresponding to the EAS associated with the first EES or the ECSP ID corresponding to the EAS associated with the first EES.

With reference to the seventh aspect, in some implementations of the seventh aspect, the information for determining the first EAS for the UE includes at least one of the PLMN ID corresponding to the EAS associated with the first EES or the ECSP ID corresponding to the EAS associated with the first EES.

Optionally, the information for determining the first EAS for the UE may further include at least one of a PLMN ID corresponding to the first EAS or an ECSP ID corresponding to the first EAS.

With reference to the seventh aspect, in some implementations of the seventh aspect, the information for requesting to determine the first EAS for the UE includes at least one of the PLMN ID corresponding to the UE or the ECSP ID corresponding to the UE.

With reference to the seventh aspect, in some implementations of the seventh aspect, the second EES obtains at least one of the PLMN ID corresponding to the UE and the ECSP ID corresponding to the UE.

With reference to the seventh aspect, in some implementations of the seventh aspect, that the second EES obtains at least one of the PLMN ID corresponding to the UE or the ECSP ID corresponding to the UE includes: The second EES receives at least one of the PLMN ID corresponding to the UE or the ECSP ID corresponding to the UE from a core network element or a second EAS, where the second EAS is an EAS associated with the second EES.

With reference to the seventh aspect, in some implementations of the seventh aspect, when the second EES receives at least one of the PLMN ID corresponding to the UE or the ECSP ID corresponding to the UE from the core network element, the method further includes: The second EES sends at least one of the PLMN ID corresponding to the UE or the ECSP ID corresponding to the UE to the second EAS.

According to an eighth aspect, a device selection method is provided. The method includes: A first EAS receives, from a first EES, information for requesting the first EAS to determine whether the first EAS has a capability of serving UE, where the UE provides a service via a second EES. After the first EAS receives the information for requesting the first EAS to determine whether the first EAS has the capability of serving the UE, the first EAS determines, based on at least one of a PLMN ID corresponding to the UE or an ECSP ID corresponding to the UE, that the first EAS has the capability of serving the UE. The first EAS sends, to the first EES, information indicating that the first EAS has the capability of serving the UE.

Based on the foregoing solution, after the first EAS receives the information for determining whether the first EAS has the capability of serving the UE, the first EAS determines, based on at least one of the PLMN ID corresponding to the UE or the ECSP ID corresponding to the UE, that the first EAS has the capability of serving the UE, and sends, to the first EES, the information indicating that the first EAS has the capability of serving the UE. Further, in some scenarios (for example, across operators or across ECSPs), in a process in which the UE performs context relocation, the first EAS selected for the UE supports the service of the UE, to avoid a problem that application context relocation of the UE fails and the service is affected because an EAS cannot satisfy the service of the UE, and improve user experience.

With reference to the eighth aspect, in some implementations of the eighth aspect, that the first EAS determines, based on at least one of the PLMN ID corresponding to the UE or the ECSP ID corresponding to the UE, that the first EAS has the capability of serving the UE includes at least one of the following manners: The first EAS determines, based on the PLMN ID corresponding to the UE and a PLMN ID corresponding to the first EAS, that the first EAS has the capability of serving the UE. The first EAS determines, based on the ECSP ID corresponding to the UE and an ECSP ID corresponding to the first EAS, that the first EAS has the capability of serving the UE.

Specifically, if the first EAS has the capability of serving the UE, the first EAS may send success information or acknowledgment information to the first EES, where the success information or the acknowledgment information indicates that the first EAS has the capability of serving the UE. If the first EAS does not have the capability of serving the UE, the first EAS sends failure information to the first EES, where the failure information indicates that the first EAS does not have the capability of serving the UE. Optionally, the failure information may carry a failure cause indication, to indicate that the first EAS cannot serve the UE.

With reference to the eighth aspect, in some implementations of the eighth aspect, the first EAS receives at least one of the PLMN ID corresponding to the UE or the ECSP ID corresponding to the UE from the first EES or a core network element.

For example, the first EAS may subscribe to a PLMN change (change) event from a 5G core network (5GC), that is, the EES may subscribe to information about the PLMN change event from a session management function (Session management function, SMF) network element, or the first EAS may subscribe to the PLMN change event from the SMF via a network element function (Network element function, NEF) network element. Then, when the SMF detects the PLMN change event of the UE, the SMF may send a PLMN change event notification message to the first EAS, where the PLMN change event notification message may carry at least one of a UE home PLMN or a UE serving PLMN.

Further, the first EAS may obtain ECSP information of the UE from a unified data management (Unified data management, UDM) network element via the SMF.

According to a ninth aspect, a device selection method is provided. The method including: A second EAS receives, from a second EES, information for determining a first EAS for UE served by the second EES, where the second EAS is an EAS associated with the second EES. After the second EAS receives the information for determining the first EAS for the UE served by the second EES, the second EAS determines the first EAS based on at least one of a PLMN ID corresponding to the UE or an ECSP ID corresponding to the UE.

Based on the foregoing solution, for beneficial effects, refer to related descriptions of the second aspect. For brevity, details are not described herein in this application.

With reference to the ninth aspect, in some implementations of the ninth aspect, that the second EAS determines the first EAS based on at least one of a PLMN ID corresponding to the UE or an ECSP ID corresponding to the UE includes at least one of the following manners: The second EAS determines the first EAS based on a PLMN ID corresponding to an EAS associated with a first EES and the PLMN ID corresponding to the UE; or the second EAS determines the first EAS based on an ECSP ID corresponding to an EAS associated with a first EES and the ECSP ID corresponding to the UE, where the first EAS is an EAS associated with the first EES.

With reference to the ninth aspect, in some implementations of the ninth aspect, the information for determining the first EAS for the UE served by the second EES includes at least one of the following information: a PLMN ID corresponding to the first EAS, an ECSP ID corresponding to the first EAS, a PLMN ID corresponding to the first EES, or an ECSP ID corresponding to the first EES.

With reference to the ninth aspect, in some implementations of the ninth aspect, the second EAS receives at least one of the PLMN ID corresponding to the UE or the ECSP ID corresponding to the UE from the second EES.

According to a tenth aspect, a device selection method is provided. The method including: A first EES receives at least one of a PLMN ID corresponding to a first EAS or an ECSP ID corresponding to the first EAS from the first EAS, where the first EAS is any EAS in EASs associated with the first EES.

With reference to the tenth aspect, in some implementations of the tenth aspect, the first EES sends, to a first ECS, at least one of the following information: the PLMN ID corresponding to the first EAS, the ECSP ID corresponding to the first EAS, a PLMN ID corresponding to the first EES, or an ECSP ID corresponding to the first EES.

With reference to the tenth aspect, in some implementations of the tenth aspect, when the at least one piece of information includes at least one of the PLMN ID corresponding to the first EES and the ECSP ID corresponding to the first EES, the method further includes any one of the following: The first EES determines, based on the PLMN ID corresponding to the first EAS, the PLMN ID corresponding to the first EES; or the first EES determines, based on the ECSP ID corresponding to the first EAS, the ECSP ID corresponding to the first EES.

With reference to the tenth aspect, in some implementations of the tenth aspect, the first EES receives at least one of the PLMN ID corresponding to the UE and the ECSP ID corresponding to the UE from a core network element.

With reference to the tenth aspect, in some implementations of the tenth aspect, the first EES receives at least one of the PLMN ID corresponding to the UE and the ECSP ID corresponding to the UE from a second EES, where the second EES serves the UE.

With reference to the tenth aspect, in some implementations of the tenth aspect, the first EAS sends at least one of the PLMN ID corresponding to the first EAS and the ECSP ID corresponding to the first EAS to the first EES.

According to an eleventh aspect, a communication apparatus is provided. The apparatus is configured to perform the method provided in any one of the first aspect to the tenth aspect. Specifically, the apparatus may include a unit and/or a module configured to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, any one of the fifth aspect or the implementations of the fifth aspect, any one of the sixth aspect or the implementations of the sixth aspect, any one of the seventh aspect or the implementations of the seventh aspect, any one of the eighth aspect or the implementations of the eighth aspect, any one of the ninth aspect or the implementations of the ninth aspect, or any one of the tenth aspect or the implementations of the tenth aspect, for example, a processing unit and/or a communication unit.

In an implementation, the apparatus is a first EES. When the apparatus is the first EES, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first EES. When the apparatus is the chip, the chip system, or the circuit used in the first EES, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is a first ECS. When the apparatus is the first ECS, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first ECS. When the apparatus is the chip, the chip system, or the circuit used in the first ECS, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is a second ECS. When the apparatus is the second ECS, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the second ECS. When the apparatus is the chip, the chip system, or the circuit used in the second ECS, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is a second EES. When the apparatus is the second EES, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the second EES. When the apparatus is the chip, the chip system, or the circuit used in the UE, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is a first EAS. When the apparatus is the first EAS, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first EAS. When the apparatus is the chip, the chip system, or the circuit used in the first EAS, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is a second EAS. When the apparatus is the second EAS, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the second EAS. When the apparatus is the chip, the chip system, or the circuit used in the second EAS, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a twelfth aspect, a communication apparatus is provided. The apparatus includes: a memory, configured to store a program; and at least one processor, configured to execute the computer program or instructions stored in the memory, to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, any one of the fifth aspect or the implementations of the fifth aspect, any one of the sixth aspect or the implementations of the sixth aspect, any one of the seventh aspect or the implementations of the seventh aspect, any one of the eighth aspect or the implementations of the eighth aspect, any one of the ninth aspect or the implementations of the ninth aspect, or any one of the tenth aspect or the implementations of the tenth aspect.

In an implementation, the apparatus is a first EES.

In another implementation, the apparatus is a chip, a chip system, or a circuit used in the first EES.

In an implementation, the apparatus is a first ECS.

In another implementation, the apparatus is a chip, a chip system, or a circuit used in the first ECS.

In an implementation, the apparatus is a second ECS.

In another implementation, the apparatus is a chip, a chip system, or a circuit used in the second ECS.

In an implementation, the apparatus is a second EES.

In another implementation, the apparatus is a chip, a chip system, or a circuit used in the second EES.

In an implementation, the apparatus is a first EAS.

In another implementation, the apparatus is a chip, a chip system, or a circuit used in the first EAS.

In an implementation, the apparatus is a second EAS.

In another implementation, the apparatus is a chip, a chip system, or a circuit used in the second EAS.

According to a thirteenth aspect, this application provides a processor, configured to perform the methods provided in the foregoing aspects.

Unless otherwise specified, or if operations such as sending and obtaining/receiving related to the processor do not contradict an actual function or internal logic of the operations in related descriptions, the operations may be understood as operations such as output, receiving, and input of the processor, or may be understood as sending and receiving operations performed by a radio frequency circuit and an antenna. This is not limited in this application.

According to a fourteenth aspect, a computer-readable storage medium is provided. The computer-readable medium stores program code to be executed by a device, and the program code is used to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, any one of the fifth aspect or the implementations of the fifth aspect, any one of the sixth aspect or the implementations of the sixth aspect, any one of the seventh aspect or the implementations of the seventh aspect, any one of the eighth aspect or the implementations of the eighth aspect, any one of the ninth aspect or the implementations of the ninth aspect, or any one of the tenth aspect or the implementations of the tenth aspect.

According to a fifteenth aspect, a computer program product including instructions is provided. When the computer program product runs on a computer, the computer is enabled to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, any one of the fifth aspect or the implementations of the fifth aspect, any one of the sixth aspect or the implementations of the sixth aspect, any one of the seventh aspect or the implementations of the seventh aspect, any one of the eighth aspect or the implementations of the eighth aspect, any one of the ninth aspect or the implementations of the ninth aspect, or any one of the tenth aspect or the implementations of the tenth aspect.

According to a sixteenth aspect, a chip is provided. The chip includes a processor and a communication interface, and the processor reads, through the communication interface, instructions stored in a memory, to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, any one of the fifth aspect or the implementations of the fifth aspect, any one of the sixth aspect or the implementations of the sixth aspect, any one of the seventh aspect or the implementations of the seventh aspect, any one of the eighth aspect or the implementations of the eighth aspect, any one of the ninth aspect or the implementations of the ninth aspect, or any one of the tenth aspect or the implementations of the tenth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, any one of the fifth aspect or the implementations of the fifth aspect, any one of the sixth aspect or the implementations of the sixth aspect, any one of the seventh aspect or the implementations of the seventh aspect, any one of the eighth aspect or the implementations of the eighth aspect, any one of the ninth aspect or the implementations of the ninth aspect, or any one of the tenth aspect or the implementations of the tenth aspect.

According to a seventeenth aspect, a device selection system is provided, including one or more of the following execution bodies described above:
a first EES, a first EAS, a first ECS, a second ECS, a second EES, or a second EAS.

### BRIEF DESCRIPTION OF DRAWINGS

FIG. 1 is a diagram of a network architecture;
FIG. 2 is a diagram of a method 200 for selecting an edge enabler server and an edge application server;
FIG. 3 is another diagram of a network architecture;
FIG. 4 is a diagram of a device selection method 400 according to an embodiment of this application;
FIG. 5 is a diagram of a device selection method 500 according to an embodiment of this application;
FIG. 6 is a diagram of a device selection method 600 according to an embodiment of this application;
FIG. 7 is a diagram of a device selection method 700 according to an embodiment of this application;
FIG. 8 is a diagram of a device selection method 800 according to an embodiment of this application;
FIG. 9 is a diagram of a device selection method 900 according to an embodiment of this application;
FIG. 10 is a diagram of an information determining method 1000 according to an embodiment of this application;
FIG. 11 is a diagram of a device selection method 1100 according to an embodiment of this application;
FIG. 12 is a diagram of a device selection method 1200 according to an embodiment of this application;
FIG. 13 is a diagram of a device selection method 1300 according to an embodiment of this application;
FIG. 14 is a diagram of an information determining method 1400 according to an embodiment of this application;
FIG. 15 is a diagram of a device selection method 1500 according to an embodiment of this application;
FIG. 16 is a block diagram of a communication apparatus 1600 according to an embodiment of this application;
FIG. 17 is a block diagram of a communication apparatus 1700 according to an embodiment of this application; and
FIG. 18 is a simplified diagram of a structure of a network device 1800.

### DESCRIPTION OF EMBODIMENTS

The following describes technical solutions in embodiments of this application with reference to the accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

First, a network architecture applicable to this application is briefly described as follows.

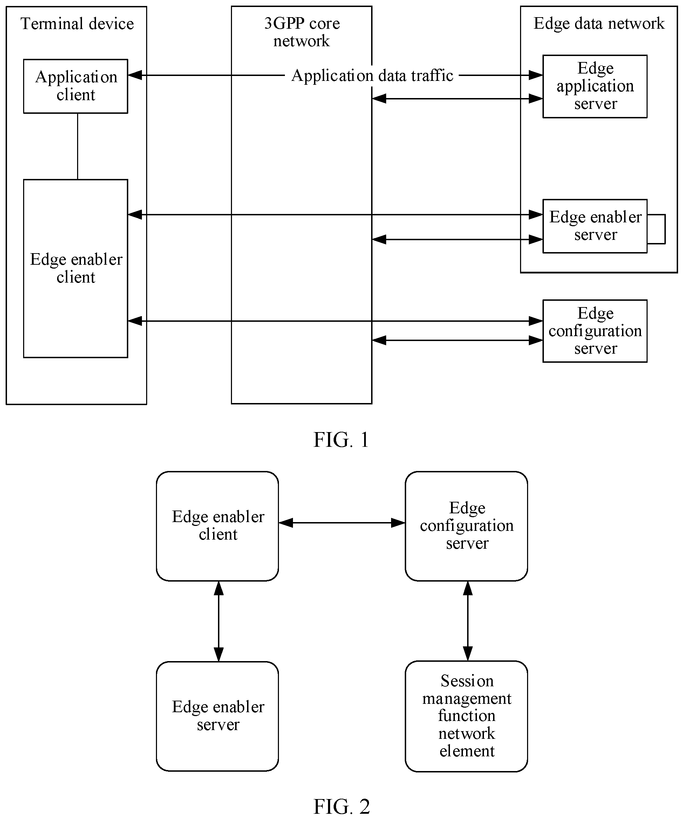

For example, FIG. 1 is a diagram of a network architecture.

As shown in FIG. 1, a multi-access edge computing (multi-access edge computing, MEC) application network is used as an example in the network architecture. The network architecture may include but is not limited to a terminal device, a 3rd generation partnership project (3rd generation partnership project, 3GPP) core network, an edge data network (edge data network, EDN), and an edge configuration server (edge configuration server, ECS). The terminal device may include an application client (application client(s)) and an edge enabler client (edge enabler client, EEC). The edge data network may include an edge application server (edge application server(s), EAS) and an edge enabler server (edge enabler server(s), EES).

The following briefly describes each network element shown in FIG. 1.
1. Terminal device: The terminal device may be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, the wearable device, a terminal device in a 5G network, a terminal device in a future evolved public land mobile communication network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a generic term for wearable devices developed by intelligently designing daily wearables by using a wearable technology, such as glasses, gloves, watches, clothing, and shoes. The wearable device is a portable device that is directly worn on a body or integrated into clothes or accessories of a user. The wearable device is not only a hardware device, but also implements a powerful function through software support, data interaction, and cloud interaction. In a broad sense, wearable intelligent devices include a full-featured and large-size device that can implement complete and partial functions without depending on a smartphone, for example, a smart watch or smart glasses, and a device that focuses on only one type of application function and needs to work with another device such as a smartphone, for example, various smart bands or smart jewelry for physical sign monitoring.

In addition, in embodiments of this application, the terminal device may alternatively be a terminal device in an IoT system. IoT is an important component in development of future information technologies. A main technical feature of the IoT is to connect an object to a network by using a communication technology, to implement an intelligent network of human-machine interconnection and thing-thing interconnection.

It should be noted that the terminal device and the access network device may communicate with each other by using an air interface technology (for example, an NR or LTE technology). The terminal devices may also communicate with each other by using an air interface technology (for example, an NR or LTE technology).

In embodiments of this application, the terminal device may be replaced with an apparatus configured to implement a function of the terminal device, or may be an apparatus that can support the terminal device in implementing the function, for example, a chip system or a chip. The apparatus may be installed in the terminal device. In addition, the chip system may include a chip, or may include a chip and another discrete device.

2. Edge data network: In an understanding, the EDN includes only one data network, is a local data network (local data network, local DN), includes an edge enabler function, may be identified by a data network access identifier (data network access identifier, DNAI) and a data network name (data network name, application instance/edge), and is a network logical concept. In another understanding, the EDN is an equivalent concept of a center cloud, may be understood as a local data center (a geographical location concept), may be identified by a DNAI, and may include a plurality of local data networks.

3. Application instance/edge application: The application instance/edge application is an application deployed in an edge data network, and may be specifically an application of a server (for example, social media software, augmented reality (augmented reality, AR), or virtual reality (virtual reality, VR)), or an instance (instance) that is deployed and runs in the EDN. One or more EASs may be deployed in one or more EDNs for one application instance/edge application. EASs deployed in different EDNs may be considered as different EASs of one application instance/edge application, and may share one domain name, and use one IP address, or may use different internet protocol (internet protocol, IP) addresses.

In addition, the application instance/edge application may also be referred to as an edge application (server), an EAS, an edge application instance, a MEC application (server), an EAS function, or the like.

4. Application client: The application client is a peer entity of an edge application on a terminal device side. The application client is used by an application user (user) to obtain an application service from an application server. The application client is a client program of an application on the terminal device side. The application client may be connected to the application server on a cloud to obtain the application service, or may be connected to an EAS that is deployed and runs in one or more EDNs to obtain the application service.

5. Edge enabler server: The edge enabler server may be deployed in an application instance of the EDN, to provide some enabling capabilities, and better support deployment of an application in MEC. The edge enabler server may support registration of an edge application, authentication and authorization on a terminal device, provide information such as an IP address of an application instance for the terminal device, may further obtain an identifier and the IP address of the application instance, and further send the identifier and the IP address of the application instance to an edge data network configuration server.

In addition, the EES is deployed in the EDN. Generally, an EAS is registered with an EES, or information about an EAS is configured on an EES via a management system, where the EES is referred to as an EES associated with the EAS, or the EES controls/manages the EAS registered/configured on the EES.

6. Edge enabler client (edge enabler client, EEC): The EEC is configured to register information about the EEC and information about the application client with the EES, perform security authentication and authorization, obtain an IP address of the EAS from the EES, and provide an edge computing enabling capability for the application client (for example, provide an EAS discovery service, and return the IP address of the EAS to the application client), and is a peer entity of the EES on the terminal device side.

7. Edge configuration server (edge configuration server, ECS): The edge configuration server may be responsible for EDN configuration (for example, providing information about the EES for the terminal device), and may further directly provide information about the application instance for the terminal device, or exchange information with a domain name server (domain name server, DNS) of the application to obtain the information about the application instance. Further, information about the application instance and the IP address may alternatively be obtained from another functional entity and stored.

The terminal device signs a service agreement with an application provider, and therefore a service is provided for the terminal device. The terminal device may log in to the application client on the terminal device, and is connected to and communicate with the EAS via the application client. The edge enabler client is a middleware layer, and is usually located in an operating system, or located between the application client and the operating system. The application client may obtain an edge enabler service from the edge enabler client in an application programming interface (application programming interface, API) manner.

For ease of understanding embodiments of this application, edge computing and a related procedure in this application are explained.

Edge computing is an open platform that integrates core capabilities of networks, computing, storage, and applications at a network edge close to objects or data sources, to provide edge intelligent services nearby and meet key requirements of industry digitalization in terms of agile connection, real-time services, data optimization, application intelligence, security and privacy protection, and the like. In other words, edge computing is to directly analyze data collected from a terminal device in a local device or network close to data generation, without transmitting the data to a cloud data processing center.

Multi-access edge computing may provide a service and a cloud computing function nearby by using a wireless access network, to create a carrier-class service environment with high performance, low latency, and high bandwidth, accelerate download of various content, services, and applications in the network, and enable a consumer to enjoy uninterrupted high-quality network experience.

A local data network is an access point (access point) of a data network that is very close to an attachment point (attachment point) of a user.

A data network is a service network of an operator or a third party, and may provide a service for a terminal device, for example, an operator service or an internet service.

FIG. 2 is a diagram of a method 200 for selecting an edge enabler server and an edge application server. As shown in FIG. 2, the method 200 may include the following steps.

S201: An edge enabler client selects an edge enabler server platform from an edge configuration server.

The step may specifically include the following steps.
1: The edge enabler client requests or subscribes to an edge enabler server corresponding to a location of a terminal device from the edge configuration server, and the edge enabler client selects an edge enabler server enabler platform or an edge data network of interest from the edge configuration server.
2: An EDN CS platform has detailed information about an application instance. The EDN CS platform obtains a DNAI based on the location of the terminal device, and selects a proper edge enabler server for each application based on the DNAI, a fully qualified domain name (fully qualified domain name, FQDN), and an edge enabler server profile (profile). In addition, the edge enabler server platform may be selected based on the location of the terminal device and another optional filter (filter).
3: Obtain a current/potential DNAI.
4: The edge enabler client obtains information about one or more edge enabler servers from the edge configuration server.

S202: The edge enabler client selects an edge application instance of an edge application server from the edge enabler server.

The step may specifically include the following steps.
1: The edge enabler client requests an edge application instance to be accessed from the edge enabler server.
2: The edge enabler server matches information about a registered application, and matches, based on information about a locally registered/online edge application instance and a discovery filtering parameter provided by a user, an edge application instance that meets a user request. If a plurality of edge application instances meet the request, the plurality of edge application instances may be returned.
3: The edge enabler server returns information about the edge application server to the edge enabler client, and then the edge enabler client may provide the edge application instance to an application client, so that the application client is connected to the edge application instance.

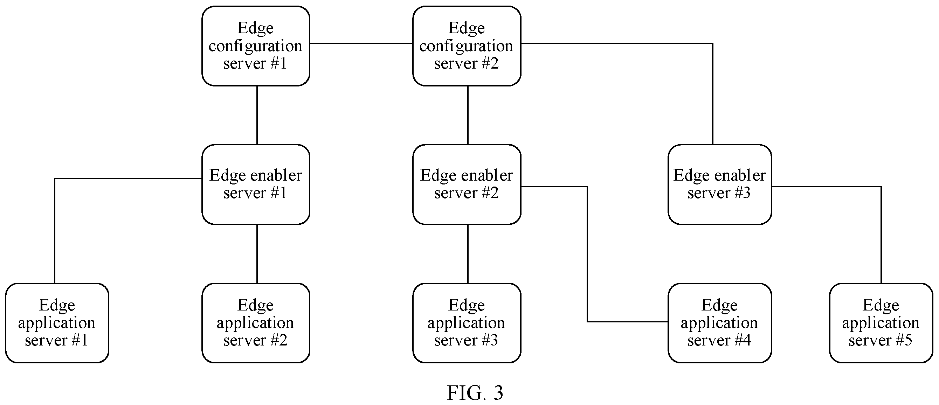

FIG. 3 is a diagram of a network architecture applicable to embodiments of this application. An operator of an edge configuration server #1, an edge enabler server #1, an edge application server #1, an edge application server #2, and an edge application server #3 is an operator A. An operator of an edge configuration server #2, an edge enabler server #2, an edge enabler server #3, an edge application server #4, and an edge application server #5 is an operator B.

As shown in FIG. 3, in an inter-operator or inter-ECSP deployment scenario, the operator A or an edge computing service provider A may request, through a joint interface between operators or edge computing service providers, the operator B or an edge computing service provider B to deploy some applications (for example, the edge application server #3), and a specific deployment location of the edge application server #3 is in a network of the operator B or the edge computing service provider B.

Specifically, an application service provider may sign an agreement with the operator A or the edge computing service provider A. To ensure that the operator A or the edge computing service provider A can serve a roaming user of the application service provider in a V network (a network in which the operator B or the edge computing service provider B is), the operator A or the edge computing service provider A may further sign an agreement with the operator B or the edge computing service provider B, and rent an edge application server or a hardware resource in the network of the operator B or the edge computing service provider B, or request the operator B or the edge computing service provider B to deploy an application instance or an edge application server required by the operator A or the edge computing service provider A.

However, in some scenarios (for example, across operators or across ECSPs), in a process in which UE performs context relocation, when an edge configuration server of the operator B or the edge computing service provider B selects an edge enabler server, and the selected edge enabler server further selects an edge application server, it cannot be ensured that there is a capability of serving the roaming user.

In view of this, this application provides a device selection method and apparatus, to ameliorate the foregoing problem.

To better understand embodiments of this application, the following descriptions are provided herein.
1. In this application, a PLMN ID corresponding to UE may be at least one of a UE home PLMN ID (UE home PLMN ID), a UE serving PLMN ID (UE serving PLMN ID), an ID of a PLMN in which the UE is, a PLMN ID supported by the UE, an ID of a PLMN in which the UE is deployed, or a PLMN ID specified by the UE. An ECSP ID corresponding to the UE may be at least one of a UE home ECSP ID (UE home ECSP ID), a UE serving ECSP ID (UE serving ECSP ID), an ID of an ECSP in which the UE is, an ECSP ID supported by the UE, a PLMN ID preferentially selected by the UE, an ECSP ID preferentially selected by the UE, or an ECSP ID specified by the UE.
2. In this application, a PLMN ID corresponding to an EAS may be at least one of an EAS home (or belonging) PLMN ID (EAS home PLMN ID), an EAS serving PLMN ID (EAS serving PLMN ID), an ID of a PLMN in which the EAS is, a PLMN ID supported by the EAS, an ID of a PLMN in which the EAS is deployed, or a PLMN ID specified by the EAS. An ECSP ID corresponding to the EAS may be at least one of an EAS home (or belonging) ECSP ID (EAS home ECSP ID), an EAS serving ECSP ID (EAS serving ECSP ID), an ID of an ECSP in which the EAS is, an ECSP ID supported by the EAS, an ID of an ECSP in which the EAS is deployed, or an ECSP ID specified by the EAS.
3. In this application, a PLMN ID corresponding to an EES may be at least one of an EES home PLMN ID (EES home PLMN ID), an EES serving PLMN ID (EES serving PLMN ID), an ID of a PLMN in which the EES is, a PLMN ID supported by the EES, an ID of a PLMN in which the EES is deployed, or a PLMN ID specified by the EES. An ECSP ID corresponding to the EES may be at least one of an EES home ECSP ID (EES home ECSP ID), an EES serving ECSP ID (EES serving ECSP ID), an ID of an ECSP in which the EES is, an ECSP ID supported by the EES, an ID of an ECSP in which the EES is deployed, or an ECSP ID specified by the EES.
   Optionally, the PLMN ID corresponding to the EES may be determined based on a PLMN ID corresponding to any EAS associated with the EES, and the ECSP ID corresponding to the EES may also be determined based on an ECSP ID corresponding to any EAS associated with the EES.
4. In this application, because an EEC is a peer entity on a UE side, although embodiments of this application are written by using the UE as an execution body, the execution body UE may alternatively be replaced with an execution body EEC.
5. In this application, each EES may be replaced with an edge enabler server, each first ECS may be replaced with a first edge configuration server, each second ECS may be replaced with a second edge configuration server, each first EAS may be replaced with a first edge application server, and each EEC may be replaced with an edge enabler client.
6. In embodiments of this application, the first ECS may be an ECS in a roaming network of the UE, a first EES may be an EES associated with the first ECS, the first EAS may be an EAS associated with the first EES, the second ECS may be an ECS in a home network of the UE, a second EES may be an EES associated with the second ECS, and a second EAS may be an EAS associated with the second EES.
7. In embodiments of this application, the user equipment (UE) may include one or more application clients (Application client, AC) and an edge enabler client (EEC). The user equipment may establish a connection to an edge data network via the application client and/or the edge enabler client, to obtain an application service.
8. In embodiments of this application, an EAS associated with the EES may also be referred to as an EAS managed by the EES, and may be an EAS registered with the EES. An EES associated with the ECS may also be referred to as an EES managed by the ECS, and may be an EES registered with the ECS.
9. The term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.
10. The following embodiments in this specification may be independent solutions, or may be combined based on internal logic. All these solutions fall within the protection scope of this application.

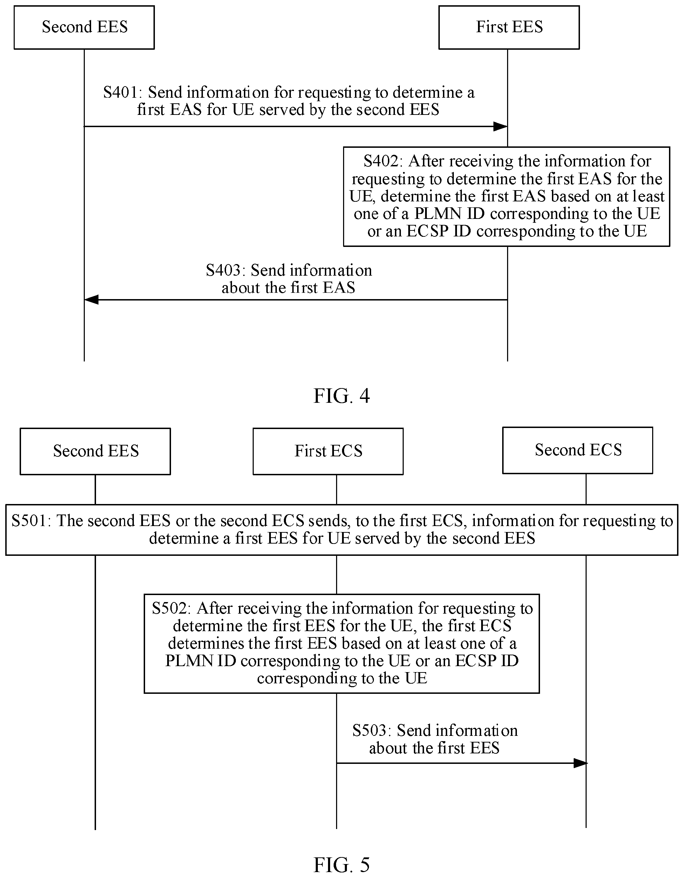

FIG. 4 is a diagram of a device selection method 400 according to an embodiment of this application. The method 400 may be combined with another embodiment in this application. For example, the method 400 may be combined with at least one of a method 500 to a method 1500. As shown in FIG. 4, the method 400 may include the following steps.

S401: A second EES sends, to a first EES, information for requesting to determine a first EAS for UE served by the second EES. Correspondingly, the first EES receives, from the second EES, the information for requesting to determine the first EAS for the UE served by the second EES.

Specifically, the information for requesting to determine the first EAS for the UE served by the second EES may include at least one of information about a PLMN ID corresponding to the UE or information about an ECSP ID corresponding to the UE. The first EAS may include one or more EASs. In an example, the information about the PLMN ID corresponding to the UE may be a UE home PLMN ID, and the ECSP ID corresponding to the UE may be a UE home ECSP ID.

In an implementation, the information for requesting to determine the first EAS for the UE may further include location information of the UE, identity information of the UE, an application client profile (AC profile) information, and/or the like.

The information for requesting to determine the first EAS for the UE may be carried in any message between the UE and an EES. For example, the information for requesting to determine the first EAS for the UE may be carried in any one of the following messages:
an EAS discovery request (EAS discovery request), an EAS discovery subscription request (EAS discovery subscription request), an EAS discovery subscription update request (EAS discovery subscription update request), a service discovery request, or the like.

S402: After the first EES receives the information for requesting to determine the first EAS for the UE, the first EES determines the first EAS based on at least one of the PLMN ID corresponding to the UE or the ECSP ID corresponding to the UE.

Specifically, the first EES may determine the first EAS in at least one of the following manners.

In a possible implementation, the first EES may determine the first EAS based on a PLMN ID corresponding to an EAS associated with the first EES and the PLMN ID of the UE.

Specifically, the first EES may match a PLMN ID corresponding to each EAS associated with the first EES with the PLMN ID corresponding to the UE. If the PLMN ID corresponding to the EAS includes the PLMN ID corresponding to the UE, it is considered that the matching succeeds, and it may be determined that the successfully matched EAS is the first EAS.

For example, if PLMN IDs corresponding to one or more EASs associated with the first EES are f 12, 34, 56}, and the PLMN ID corresponding to the UE is {12}, the one or more EASs may be considered as the first EAS.

In another possible implementation, the first EES may determine the first EAS based on an ECSP ID corresponding to an EAS associated with the first EES and the ECSP ID of the UE.

Specifically, the first EES may match an ECSP ID corresponding to each EAS associated with the first EES with the ECSP ID corresponding to the UE. If the ECSP ID corresponding to the EAS includes the ECSP ID corresponding to the UE, it is considered that the matching succeeds, and it may be determined that the successfully matched EAS is the first EAS.

For example, if ECSP IDs corresponding to one or more EASs associated with the first EES are {13, 35, 52}, and the ECSP ID corresponding to the UE is {35}, the one or more EASs may be considered as the first EAS.

Further, the first EES may determine the first EAS based on information about a service supported by the EAS associated with the EES and at least one of the PLMN ID corresponding to the UE, the ECSP ID corresponding to the UE, or a service requested by the UE.

Specifically, the first EES may match a service supported by each EAS associated with the first EES with at least one of the PLMN ID corresponding to the UE, the ECSP ID corresponding to the UE, or the service requested by the UE. If the matching succeeds, it is determined that the successfully matched EAS is the first EAS.

It should be understood that the first EAS is an EAS associated with the first EES, that is, the first EAS is one or more EASs in EASs associated with the first EES.

It should be further understood that the first EES may match each EAS associated with the first EES with the UE, and finally select all successfully matched EASs as the first EAS. Alternatively, when an EAS associated with the first EES is successfully matched with the UE, the EAS may be selected as the first EAS, and the matching stops.

S403: The first EES sends information about the first EAS to the second EES. Correspondingly, the second EES receives the information about the first EAS from the first EES.

The information about the first EAS may include one or more of the following information: identification information of the first EAS, endpoint information (for example, an endpoint address such as a uniform resource identifier, an internet protocol, or a fully qualified domain name) of the first EAS, and a PLMN ID of the first EAS or an ECSP ID of the first EAS.

Specifically, the information about the first EAS may include the identification information of the first EAS. Further, the information about the first EAS may further include at least one of an indication indicating whether the first EAS supports in serving roaming UE, the PLMN ID corresponding to the first EAS, or the ECSP ID corresponding to the first EAS.

In an implementation, the first EES may send a response message to the second EES, where the response message includes the information about the first EAS. Specifically, the response message may be an EAS discovery response (EAS discovery response) message or an EAS discovery subscription response (EAS discovery subscription response) message, an EAS discovery subscription update response (EAS discovery subscription update response) message, a service discovery response message, or the like.

In an optional manner, alternatively, the first EES may not determine the first EAS, that is, steps 402 and 403 may not be performed. The method is as follows: The first EES determines the EAS associated with the first EES, and sends information about the EAS associated with the first EES (including information indicating whether each EAS associated with the first EES supports in serving a roaming terminal device, for example, at least one of a PLMN ID corresponding to each EAS or an ECSP ID corresponding to each EAS) to the second EES serving the UE, so that after receiving the foregoing information, the second EES may determine the first EAS with reference to at least one of a corresponding PLMN ID or the ECSP ID corresponding to the UE. For a specific method used by the second EES to determine the first EAS, refer to related descriptions of the following method 1100.

In this application, the first EES may determine, based on one or more of parameters such as the location information of the UE, an EAS discovery filter (EAS discovery filter), and an ECSP policy, the EAS associated with the first EES.

In addition, if each EAS associated with the first EES has no capability of serving the UE, the first EES sends failure information to the second EES, where the failure information indicates that no EAS has a capability of serving the UE. Optionally, the failure information may carry a failure cause indication indicating that no EAS can serve the UE.

Optionally, to register with a first ECS, the method 400 further includes: The first EES sends at least one of the following information to the first ECS:
the PLMN ID corresponding to the first EAS, the ECSP ID corresponding to the first EAS, a PLMN ID corresponding to the first EES, or an ECSP ID corresponding to the first EES.

The at least one of the foregoing information may identify whether the first EAS can serve the roaming UE, whether the first EAS can serve a user of a cooperative ECSP, whether the first EES can serve the roaming UE, whether the first EES can serve a user of a cooperative ECSP, or whether the EAS associated with the first EES can serve the roaming UE or serve a user of a cooperative ECSP.

In an implementation, the first EES may send a service registration request message to the first ECS, where the service registration request message includes the at least one of the foregoing information.

In addition, the at least one of the foregoing information may alternatively be carried in any other message between the first EES and the first ECS. This is not limited herein in this application.

Further, when the foregoing information may include at least one of information about the PLMN ID corresponding to the first EES or the ECSP ID corresponding to the first EES, the method 400 further includes at least one of the following:

In a possible implementation, the first EES may determine, based on the PLMN ID corresponding to the first EAS, the PLMN ID corresponding to the first EES.

For example, the EES may use a union set of a home PLMN ID of the EES and a PLMN ID supported by the first EAS as a PLMN ID supported by the EES.

For example, the EES may use a union set of a serving PLMN ID of the EES before the first EAS performs registration and a serving PLMN ID of the first EAS as a serving PLMN ID of the EES after the first EAS performs registration.

In another possible implementation, the first EES may determine, based on the ECSP ID corresponding to the first EAS, the ECSP ID corresponding to the first EES.

For example, the EES may use a union set of a home ECSP ID of the EES and an ECSP ID supported by the first EAS as an ECSP ID supported by the EES.

For example, the EES may use a union set of a serving ECSP ID of the EES before the first EAS performs registration and a serving ECSP ID of the first EAS as a serving ECSP ID of the EES after the first EAS performs registration.

In addition, after the first EES sends the service registration request message to the first ECS, the first EES may receive a registration (update) response message from the first ECS.

Optionally, the first ECS may send at least one of a PLMN supported by the first ECS or an ECSP supported by the first ECS to a second ECS. Further, the first ECS may further send at least one of the PLMN ID corresponding to the EES, the ECSP ID corresponding to the EES, the PLMN ID corresponding to the first EAS, or the ECSP ID corresponding to the first EAS to the second ECS.

To implement step 402, this application further provides a method used by the EES to obtain at least one of the PLMN ID corresponding to the UE or the ECSP ID corresponding to the UE. The method 400 may further include: The first EES receives at least one of the PLMN ID corresponding to the UE or the ECSP ID corresponding to the UE from a core network element. Correspondingly, the core network element sends at least one of the PLMN ID corresponding to the UE or the ECSP ID corresponding to the UE to the first EES.

Specifically, the first EES may subscribe to a PLMN change (change) event from a 5G core network (5GC), that is, the first EES may subscribe to information about the PLMN change event from a session management function (Session management function, SMF) network element, or the EES may subscribe to the PLMN change event from the SMF via a network element function (Network element function, NEF) network element. Then, when the SMF detects the PLMN change event of the UE, the SMF may send a PLMN change event notification message to the first EES, where the PLMN change event notification message may carry at least one of a UE home PLMN or a UE serving PLMN.

Further, the first EES may obtain ECSP information of the UE from a unified data management (Unified data management, UDM) network element via the SMF.

It should be understood that, in this case, the first EES may obtain, via the core network element, at least one of the PLMN ID corresponding to the UE or the ECSP ID corresponding to the UE. Therefore, the information for requesting to determine the first EAS for the UE in step S401 may not include at least one of the information about the PLMN ID corresponding to the UE or the information about the ECSP ID corresponding to the UE.

To implement step 402, this application further provides a method used by the first EES to obtain at least one of the PLMN ID corresponding to the first EAS or the ECSP ID corresponding to the first EAS. The method 400 may further include: The first EES receives at least one of the PLMN ID corresponding to the first EAS or the ECSP ID corresponding to the first EAS from the first EAS. Correspondingly, the first EAS sends at least one of the PLMN ID corresponding to the first EAS or the ECSP ID corresponding to the first EAS to the first EES.

The at least one piece of information may identify whether the first EAS can serve the roaming UE, and/or whether the first EAS can serve the user of the cooperative ECSP.

In a possible implementation, the first EAS may send an EAS registration request message (EAS registration (update) request) to the first EES, where the EAS registration request message carries at least one of the PLMN ID corresponding to the first EAS or the ECSP ID corresponding to the first EAS. Further, the foregoing information may be stored in an EAS profile (EAS profile).

In addition, at least one of the PLMN ID corresponding to the first EAS or the ECSP ID corresponding to the first EAS may alternatively be carried in any one of the following messages. A specific bearer message is not limited:
a UE location (update) request (UE location (update) request), a UE location subscription (update) request (UE location subscribe (update) request), an application context relocation management event (update) subscription request (Application context relocation management event (update) subscribe request, ACR management event (update) subscribe request), an application client information subscription (update) request (AC information subscription (update) request), a UE identifier application programming interface (update) request (UE identifier application programming interface (update) request, UE identifier API (update) request), and a session with quality of service create (update) request (Session with QoS create (update) request).

Optionally, after receiving the registration request message, the EES may store information included in the registration request message, and send a registration (update) response message to the first EAS.

In an implementation, the first EES may receive information about all EASs associated with the first EES. For ease of description, all the EASs associated with the first EES may be referred to as third EASs. The third EASs may include the first EAS.

For example, the EES may receive at least one of a PLMN ID corresponding to the third EAS or an ECSP ID corresponding to the third EAS. Based on the foregoing solution, in some scenarios (for example, across operators or across ECSPs), the first EAS selected by the first EES for the UE supports a service of the UE, to avoid a problem that application context relocation of the UE fails and the service is affected because an EAS obtained by the first EES cannot satisfy the service of the UE, and improve user experience.

FIG. 5 is a diagram of a device selection method 500 according to an embodiment of this application. The method 500 may be combined with another embodiment in this application. For example, the method 500 may be combined with at least one of a method 400, a method 600, a method 800, a method 1000, a method 1100, a method 1400, and a method 1500. As shown in FIG. 5, the method 500 may include the following steps.

S501: A second EES or a second ECS sends, to a first ECS, information for requesting to determine a first EES for UE served by the second EES. Correspondingly, the first ECS receives, from the second EES or the second ECS, the information for requesting to determine the first EES for the UE served by the second EES.

For example, the information for requesting to determine the first EES for the UE served by the second EES may include at least one of a PLMN ID corresponding to the UE or an ECSP ID corresponding to the UE. The second EES is an EES associated with the second ECS.

In an implementation, the second EES or the second ECS may send a service provisioning request message to the first ECS, where the service provisioning request message may include the information for requesting to determine the first EES for the UE.

S502: After the first ECS receives the information for requesting to determine the first EES for the UE, the first ECS determines the first EES based on at least one of the PLMN ID corresponding to the UE or the ECSP ID corresponding to the UE.

Specifically, the first ECS may determine the first EES based on at least one of the PLMN ID corresponding to the UE and the ECSP ID corresponding to the UE in any one of the following manners.

In a possible implementation, the first ECS may determine the first EES based on the PLMN ID corresponding to the UE and a PLMN ID corresponding to the first EES.

Specifically, the first ECS may match the PLMN ID corresponding to the first EES with the PLMN ID corresponding to the UE. If the PLMN ID corresponding to the first EES includes the PLMN ID corresponding to the UE, it is considered that the matching succeeds, and it may be determined that the successfully matched first EES is an EES determined for the UE.

For example, if the PLMN ID corresponding to the first EES is {12, 31}, and the PLMN ID corresponding to the UE is {12}, it may be considered that the first EES is the EES determined for the UE.

Further, the first ECS may further determine the first EES based on the PLMN ID corresponding to the UE, the PLMN ID corresponding to the first EES, and a capability of an EAS associated with the first EES.

The capability of the EAS associated with the first EES may include at least one of a PLMN ID corresponding to the EAS associated with the EES or an ECSP ID corresponding to the EAS associated with the first EES.

Specifically, the first ECS may match the PLMN ID corresponding to the first EES and the PLMN ID corresponding to the EAS associated with the first EES with the PLMN ID corresponding to the UE. If the PLMN ID corresponding to the first EES and the PLMN ID corresponding to the EAS associated with the first EES include the PLMN ID corresponding to the UE, it is considered that the matching succeeds, and it may be determined that the first EES is the EES determined for the UE.

For example, if the PLMN ID corresponding to the first EES is {12, 31, 49}, the PLMN ID corresponding to the EAS associated with the first EES is {31, 41}, and the PLMN ID corresponding to the UE is {31}, it may be considered that the first EES is the EES determined for the UE.

It should be understood that, in the foregoing matching process, if the EAS associated with the first EES that can be successfully matched with the UE already exists, matching between the PLMN ID corresponding to the EAS associated with the first EES and the PLMN ID corresponding to the UE may be stopped.

In another possible implementation, the first ECS may determine the first EES based on the ECSP ID corresponding to the UE and the ECSP ID corresponding to the first EES. Further, the first ECS may further determine the first EES based on the ECSP ID corresponding to the UE, the ECSP ID corresponding to the first EES, and the capability of the EAS associated with the first EES.

Specifically, the first ECS may match the ECSP ID corresponding to the first EES with the ECSP ID corresponding to the UE. If the ECSP ID corresponding to the first EES includes the ECSP ID corresponding to the UE, it is considered that the matching succeeds, and it may be determined that the successfully matched first EES is the EES determined for the UE.

For example, if the ECSP ID corresponding to the first EES is {14, 32}, and the ECSP ID corresponding to the UE is {32}, it may be considered that the first EES is the EES determined for the UE.

Further, the first ECS may further determine the first EES based on the ECSP ID corresponding to the UE, the ECSP ID corresponding to the first EES, and the capability of the EAS associated with the first EES.

Specifically, the first ECS may match the ECSP ID corresponding to the first EES and the ECSP ID corresponding to the EAS associated with the EES with the ECSP ID corresponding to the UE. If the ECSP ID corresponding to the first EES and the ECSP ID corresponding to the EAS associated with the first EES include the ECSP ID corresponding to the UE, it is considered that the matching succeeds, and it may be determined that the first EES is the EES determined for the UE.

For example, if the ECSP ID corresponding to the first EES is {12, 30, 42}, the ECSP ID corresponding to the EAS associated with the first EES is {12, 41}, and the ECSP ID corresponding to the UE is {12}, it may be considered that the first EES is the EES determined for the UE.

It should be understood that, in the foregoing matching process, if the EAS associated with the first EES that can be successfully matched with the UE already exists, matching between the PLMN ID corresponding to the EAS associated with the first EES and the PLMN ID corresponding to the UE may be stopped.

S503: The first ECS sends information about the first EES to the second ECS. Correspondingly, the second ECS receives the information about the first EES from the first ECS.

The information about the first EES may include identification information of the first EES, endpoint information (for example, an endpoint address such as a uniform resource identifier of the first EES, an internet protocol of the first EES, or a fully qualified domain name of the first EES) of the first EES, a service range of the first EES, a data network access identifier of the first EES, and other information.

Optionally, the information about the first EES may further include at least one of identification information of the EAS associated with the first EES, endpoint information (for example, an endpoint address such as a uniform resource identifier, an internet protocol, or a fully qualified domain name) of the EAS associated with the first EES, the PLMN ID of the EAS associated with the first EES, or the ECSP ID of the EAS associated with the first EES.

Further, the first EES may include one or more first EESs.

In an implementation, the first ECS may send a service provisioning response message to the second ECS, where the service provisioning response message may include the information about the first EES.

It should be understood that, if the first ECS determines that no EES supports a service of the UE, the first ECS may return failure indication information and a failure cause to the UE, to indicate that no EES can support the service of the UE.

Further, the second ECS may send the information about the first EES to the second EES.

In addition, the first ECS may alternatively directly send the information about the first EES to the second EES based on the first EES.

Optionally, the method 500 further includes: The first ECS receives, from the second EES, information for requesting to determine a first EAS for the UE. Correspondingly, the second EES sends, to the first ECS, the information for requesting to determine the first EAS for the UE. The first EAS is an EAS associated with the first EES.

For example, the information for requesting to determine the first EAS for the UE may include at least one of the PLMN ID corresponding to the UE or the ECSP ID corresponding to the UE.

In an implementation, the second EES may send a service discovery request message to the first ECS, where the service discovery request message may include the information for requesting to determine the first EAS for the UE.

Optionally, after the first ECS receives the information for determining the first EAS for the UE, the method 500 further includes: The first ECS determines the first EAS based on at least one of the PLMN ID corresponding to the UE or the ECSP ID corresponding to the UE.

Specifically, that the first ECS determines the first EAS based on at least one of the PLMN ID corresponding to the UE or the ECSP ID corresponding to the UE may include at least one of the following manners.

In a possible implementation, the first ECS determines the first EAS based on the PLMN ID corresponding to the UE and the PLMN ID corresponding to the EAS associated with the first EES.

In another possible implementation, the first ECS determines the first EAS based on the ECSP ID corresponding to the UE and the ECSP ID corresponding to the EAS associated with the first EES.

Specifically, for descriptions of determining the first EAS by the first ECS, refer to the related descriptions of determining the first EAS by the first EES in S402. For brevity, details are not described herein again in this application.

Optionally, after the first EAS is determined, the method 500 further includes: The first ECS sends information about the first EAS to the second EES based on the first EAS. Correspondingly, the second EES receives the information about the first EAS from the first ECS.

Specifically, for descriptions of the information about the first EAS, refer to the descriptions of the information about the first EAS in S403. For brevity, details are not described herein again in this application.

In an implementation, the first ECS may send a service discovery response message to the second EES, where the service discovery response message may include the information about the first EAS.

Optionally, the method 500 further includes: The first ECS receives at least one of a PLMN ID corresponding to the first EAS, an ECSP ID corresponding to the first EAS, the PLMN ID corresponding to the first EES, or the ECSP ID corresponding to the first EES from the first EES. Correspondingly, the first EES may send the foregoing information to the first ECS.

In an implementation, the first EES may send a service registration request message to the first ECS, where the service registration request message includes at least one of the foregoing information.

In addition, the at least one of the foregoing information may alternatively be carried in any other message between the first EES and the first ECS. This is not limited herein in this application.

Further, the first ECS may send a registration (update) response message to the first EES.

Based on the foregoing solution, in some scenarios (for example, across operators or across ECSPs), the first EES selected by the first ECS for the UE supports the service of the UE, to avoid a problem that application context relocation of the UE fails and the service is affected because the first EES obtained by the first ECS cannot satisfy the service of the UE and an EAS that is further selected cannot satisfy the service of the UE, and improve user experience.

In addition, the first EAS selected by the first ECS for the UE supports the service of the UE, to avoid a problem that the service is affected because the EAS obtained by the first ECS cannot satisfy the service of the UE, and improve user experience.

In addition, if determining that no EES supports the service of the UE, the first ECS may return failure indication information to the second EES. Therefore, it is avoided that the second EES still initiates a service when no EES supports the service of the UE.

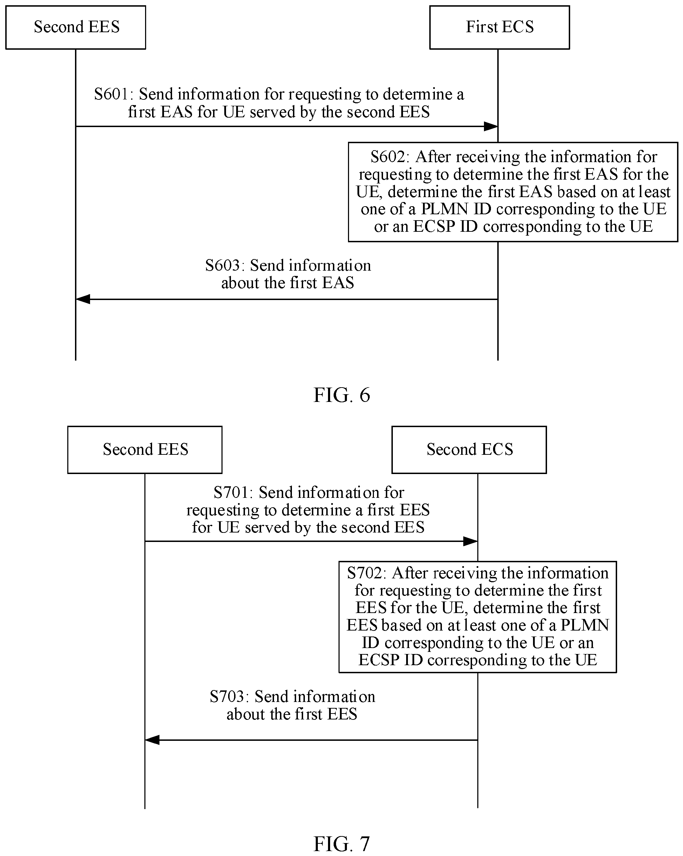

FIG. 6 is a diagram of a device selection method 600 according to an embodiment of this application. The method 600 may be combined with another embodiment in this application. For example, the method 600 may be combined with at least one of a method 400, a method 500, a method 700, a method 900, a method 1000, a method 1400, and a method 1500. As shown in FIG. 6, the method 600 may include the following steps.

S601: A second EES sends, to a first ECS, information for requesting to determine a first EAS for UE served by the second EES. Correspondingly, the first ECS receives, from the second EES, the information for requesting to determine the first EAS for the UE served by the second EES.

Specifically, for descriptions of the information for requesting to determine the first EAS for the UE, refer to the related descriptions of the information for requesting to determine the first EAS for the UE in S401. For brevity, details are not described herein in this application.

S602: After the first ECS receives the information for requesting to determine the first EAS for the UE, the first ECS determines the first EAS based on at least one of a PLMN ID corresponding to the UE or an ECSP ID corresponding to the UE.

Specifically, for descriptions of determining the first EAS by the first ECS, refer to the descriptions of determining the first EAS by the EES in S402. For brevity, details are not described herein again in this application.

S603: The first ECS sends information about the first EAS to the second EES. Correspondingly, the second EES receives the information about the first EAS from the first ECS.

Specifically, for descriptions of the information about the first EAS, refer to the related descriptions of the information about the first EAS in S403. For brevity, details are not described herein again in this application.

In addition, if the first ECS determines that no EAS has a capability of serving the UE, the first ECS sends failure information to the second EES, where the failure information indicates that no EAS has the capability of serving the UE. Optionally, the failure information may carry a failure cause indication indicating that no EAS can serve the UE.

Optionally, to determine a first EES of the UE, the method 600 further includes: The second EES or a second ECS sends, to the first ECS, information for requesting to determine the first EES for the UE. Correspondingly, the first ECS receives, from the second EES or the second ECS, the information for requesting to determine the first EES for the UE.

In an implementation, the second EES or the second ECS may send a service provisioning request message to the first ECS, where the service provisioning request message may include the information for requesting to determine the first EES for the UE.

Optionally, after the first ECS receives, from the second EES or the second ECS, the information for requesting to determine the first EES for the UE, the method 600 further includes: The first ECS determines the first EES based on at least one of the PLMN ID corresponding to the UE or the ECSP ID corresponding to the UE.

Specifically, for descriptions of determining the EES by the first ECS, refer to the descriptions of determining the EES by the first ECS in S502. For brevity, details are not described herein again in this application.

Optionally, after the first EES is determined, the method 600 further includes: The first ECS sends information about the first EES to the second ECS. Correspondingly, the second ECS receives the information about the first EES from the first ECS.

Specifically, for descriptions of the information about the EES, refer to the related descriptions of the information about the EES in S503. For brevity, details are not described herein again in this application.

Optionally, to implement S603, the method 600 further includes: The first ECS receives at least one of a PLMN ID corresponding to the first EES or an ECSP ID corresponding to the first EES from the first EES. Correspondingly, the first EES sends at least one of the PLMN ID corresponding to the first EES or the ECSP ID corresponding to the first EES to the first ECS.

Further, the first ECS may further receive at least one of a PLMN ID corresponding to the first EAS or an ECSP ID corresponding to the first EAS from the first EES.

It should be understood that, if the first ECS determines that no EES supports a service of the UE, the first ECS may return failure indication information and a failure cause to the second EES, to indicate that no EES can support the service of the UE.

Based on the foregoing solution, in some scenarios (for example, across operators or across ECSPs), the first EAS selected by the first ECS for the UE supports the service of the UE, to avoid a problem that application context relocation of the UE fails and the service is affected because the EAS cannot satisfy the service of the UE and an EAS that is further selected cannot satisfy the service of the UE, and improve user experience.

In addition, the first EES selected by the first ECS for the UE supports the service of the UE, to avoid a problem that the service is affected because the first EES cannot satisfy the service of the UE, and improve user experience.

In addition, if determining that no EES supports the service of the UE, the first ECS may return failure indication information to the UE. Therefore, it is avoided that the second EES still initiates a service when no EES supports the service of the UE.

FIG. 7 is a diagram of a device selection method 700 according to an embodiment of this application. The method 700 may be combined with another embodiment in this application. For example, the method 700 may be combined with at least one of a method 400, a method 600, a method 800, a method 1000, a method 1100, a method 1200, a method 1300, a method 1400, and a method 1500. As shown in FIG. 7, the method 700 may include the following steps.

S701: A second EES sends, to a second ECS, information for requesting to determine a first EES for UE served by the second EES. Correspondingly, the second ECS receives, from the second EES, the information for requesting to determine the first EES for the UE served by the second EES.

For example, the information for requesting to determine the first EES for the UE served by the second EES may include at least one of a PLMN ID corresponding to the UE or an ECSP ID corresponding to the UE.

In an implementation, the second EES may send a service provisioning request message to the second ECS, where the service provisioning request message may include the information for requesting to determine the first EES for the UE.

S702: After the second ECS receives the information for requesting to determine the first EES for the UE, the second ECS determines the first EES based on at least one of the PLMN ID corresponding to the UE or the ECSP ID corresponding to the UE.

Specifically, for descriptions of determining the first EES by the second ECS, refer to the descriptions of determining the first EES by the first ECS in S502. For brevity, details are not described herein again in this application.

S703: The second ECS sends information about the first EES to the second EES. Correspondingly, the second EES receives the information about the first EES from the second ECS.

For the information about the first EES, refer to the information about the first EES in S503. For brevity, details are not described herein in this application.

It should be understood that, if the second ECS determines that no EES supports a service of the UE, the second ECS may return failure indication information and a failure cause to the second EES, to indicate that no EES can support the service of the UE.

Optionally, to determine a first EAS of the UE, the method 700 further includes: The second EES sends, to the second ECS, information for requesting to determine the first EAS for the UE. Correspondingly, the second ECS receives, from the second EES, the information for requesting to determine the first EAS for the UE.

In an implementation, the second EES may send a service discovery request message to the second ECS, where the service discovery request message may include the information for requesting to determine the first EAS for the UE.

Optionally, after the second ECS receives the information for requesting to determine the first EAS for the UE, the method 700 further includes: The second ECS determines the first EAS based on at least one of the PLMN ID corresponding to the UE or the ECSP ID corresponding to the UE.

Specifically, for descriptions of determining the first EAS by the second ECS, refer to the descriptions of determining the first EAS by the first EES in S402. For brevity, details are not described herein again in this application.

Optionally, after the first EAS is determined, the method 700 further includes: The second ECS sends information about the first EAS to the second EES based on the first EAS. Correspondingly, the second EES receives the information about the first EAS from the second ECS.

Specifically, for descriptions of the information about the first EAS, refer to the descriptions of the information about the first EAS in S403. For brevity, details are not described herein again in this application.

In an implementation, the second ECS may send a service discovery response message to the second EES, where the service discovery response message may include the information about the first EAS.

Optionally, to implement step S703, the method 700 further includes: The second ECS receives at least one of a PLMN ID corresponding to an EAS associated with the first EES or an ECSP ID corresponding to the EAS associated with the first EES from the first ECS.

Further, the second ECS may further receive at least one of a PLMN ID corresponding to the first EAS or an ECSP ID corresponding to the first EAS from the first ECS.

In addition, if the second ECS determines that no EAS has a capability of serving the UE, the second ECS sends failure information to the second EES, where the failure information indicates that no EAS has the capability of serving the UE. Optionally, the failure information may carry a failure cause indication indicating that no EAS can serve the UE.

Based on the foregoing solution, the first EES selected by the second ECS for the UE supports the service of the UE, to avoid a problem that application context relocation of the UE fails and the service is affected because the first EES cannot satisfy the service of the UE and an EAS that is further selected cannot satisfy the service of the UE, and improve user experience.

In addition, the first EAS selected by the second ECS for the UE supports the service of the UE, to avoid a problem that the service is affected because the EAS cannot satisfy the service of the UE, and improve user experience.

In addition, if determining that no EES supports the service of the UE, the second ECS may return failure indication information to the second EES. Therefore, it is avoided that the second EES still initiates a service when no EES supports the service of the UE.

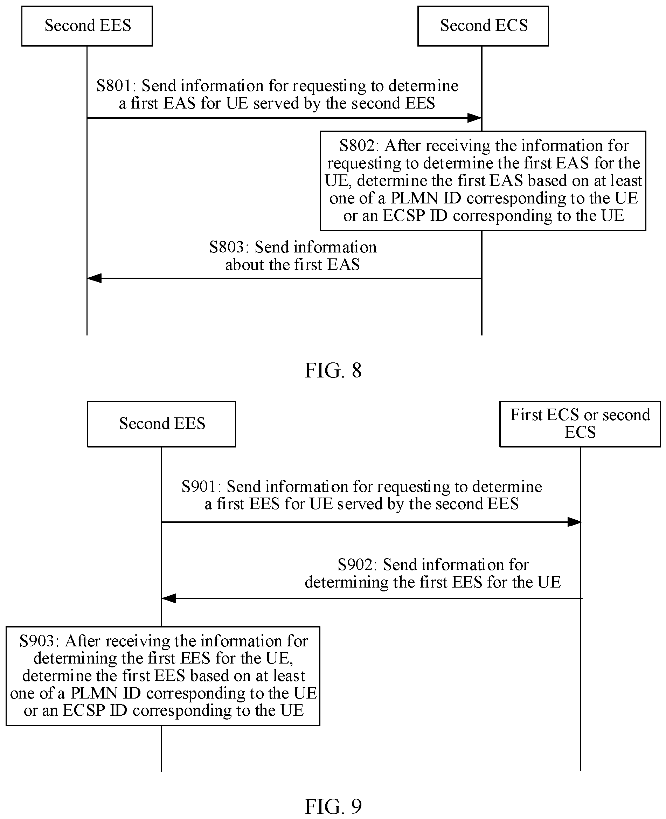

FIG. 8 is a diagram of a device selection method 800 according to an embodiment of this application. The method 800 may be combined with another embodiment in this application. For example, the method 800 may be combined with at least one of a method 400, a method 500, a method 700, a method 900, a method 1000, a method 1400, and a method 1500. As shown in FIG. 8, the method 800 may include the following steps.

S801: A second EES sends, to a second ECS, information for requesting to determine a first EAS for UE served by the second EES. Correspondingly, the second ECS receives, from the second EES, the information for requesting to determine the first EAS for the UE served by the second EES.

Specifically, the information for requesting to determine the first EAS for the UE served by the second EES may include at least one of information about a PLMN ID corresponding to the UE or information about an ECSP ID corresponding to the UE.

In an implementation, the UE may send a service discovery request message to the second ECS, where the service discovery request message includes the information for requesting to determine the first EAS for the UE.

Optionally, the service discovery request message may further include location information of the UE, identity information of the UE, and application client profile (AC profile) information.

S802: After the second ECS receives the information for requesting to determine the first EAS for the UE, the second ECS determines the first EAS based on at least one of the PLMN ID corresponding to the UE or the ECSP ID corresponding to the UE.

Specifically, for descriptions of determining the first EAS by the second ECS, refer to the descriptions of determining the first EAS by the first EES in S402. For brevity, details are not described herein again in this application.

S803: The second ECS sends information about the first EAS to the second EES. Correspondingly, the second EES receives the information about the first EAS from the second ECS.

Specifically, for descriptions of the information about the first EAS, refer to the related descriptions of the information about the first EAS in S403. For brevity, details are not described herein again in this application.

In addition, if the second ECS determines that no EAS has a capability of serving the UE, the second ECS sends failure information to the second EES, where the failure information indicates that no EAS has the capability of serving the UE. Optionally, the failure information may carry a failure cause indication indicating that no EAS can serve the UE.

Optionally, to determine the first EES of the UE, the method 800 further includes: The second ECS receives, from the second EES, information for requesting to determine the first EES for the UE. Correspondingly, the second EES sends, to the second ECS, the information for requesting to determine the first EES for the UE.

In an implementation, the UE may send a service provisioning request message to the second ECS, where the service provisioning request message may include the information for requesting to determine the first EES for the UE.

Optionally, after the second ECS receives the information for requesting to determine the first EES for the UE, the method 800 further includes: The second ECS determines the first EES based on at least one of the PLMN ID corresponding to the UE or the ECSP ID corresponding to the UE.

Specifically, for descriptions of determining the first EES by the second ECS, refer to the descriptions of determining the first EES by the first ECS in S502. For brevity, details are not described herein again in this application.

Optionally, after the first EES is determined, the method 800 further includes: The second ECS sends information about the first EES to the second EES based on the first EES. Correspondingly, the second EES receives the information about the first EES from the second ECS.

For the information about the first EES, refer to the information about the EES in S503. For brevity, details are not described herein in this application.

Optionally, to implement S803, the method 800 further includes: The second ECS receives at least one of a PLMN ID corresponding to the first EES or an ECSP ID corresponding to the EES from the first ECS. Correspondingly, the first ECS sends at least one of the PLMN ID corresponding to the first EES or the ECSP ID corresponding to the first EES to the second ECS.

The first EES is an EES associated with the first ECS.

Optionally, the second ECS may further receive at least one of a PLMN ID corresponding to the first EAS or an ECSP ID corresponding to the first EAS from the first ECS.

It should be understood that, if the second ECS determines that no EES supports a service of the UE, the second ECS may return failure indication information and a failure cause to the second EES, to indicate that no EES can support the service of the UE.

Based on the foregoing solution, in some scenarios (for example, across operators or across ECSPs), the first EAS selected by the second ECS for the UE supports the service of the UE, to avoid a problem that application context relocation of the UE fails and the service is affected because the EAS cannot satisfy the service of the UE and an EAS that is further selected cannot satisfy the service of the UE, and improve user experience.

In addition, the first EES selected by the second ECS for the UE supports the service of the UE, to avoid a problem that the service is affected because the first EES cannot satisfy the service of the UE, and improve user experience.

In addition, if determining that no EES supports the service of the UE, the second ECS may return failure indication information to the UE. Further, it is avoided that the UE still initiates a service when no EES supports the service of the UE.

FIG. 9 is a diagram of a device selection method 900 according to an embodiment of this application. The method 900 may be combined with another embodiment in this application. For example, the method 900 may be combined with at least one of a method 400, a method 600, a method 800, a method 1000, a method 1100, a method 1200, a method 1400, and a method 1500. As shown in FIG. 9, the method 900 may include the following steps.

S901: A second EES sends, to a first ECS or a second ECS, information for requesting to determine a first EES for UE served by the second EES. Correspondingly, the first ECS or the second ECS receives, from the second EES, the information for requesting to determine the first EES for the UE.

The information for requesting to determine the first EES for the UE may include at least one of a PLMN ID corresponding to the UE or an ECSP ID corresponding to the UE.

S902: The first ECS or the second ECS sends, to the second EES, information for determining the first EES for the UE. Correspondingly, the second EES receives, from the first ECS or the second ECS, the information for determining the first EES for the UE.

For example, the information for determining the first EES for the UE includes at least one of a PLMN ID corresponding to the first EES or an ECSP ID corresponding to the first EES.

S903: After the second EES receives the information for determining the first EES for the UE, the second EES determines the first EES based on at least one of the PLMN ID corresponding to the UE or the ECSP ID corresponding to the UE.

Specifically, for descriptions of determining the first EES by the second EES, refer to the descriptions of determining the first EES by the first ECS in S502. For brevity, details are not described herein in this application.

Optionally, to determine a first EAS of the UE, the method 900 further includes: The second EES sends, to the first ECS, the second ECS, or the first EES, information for requesting to determine the first EAS for the UE. Correspondingly, the first ECS, the second ECS, or the first EES receives, from the second EES, the information for requesting to determine the first EAS for the UE.

Optionally, after the first ECS, the second ECS, or the first EES receives the information for requesting to determine the first EAS for the UE, the method 900 further includes: The first ECS, the second ECS, or the first EES sends, to the second EES, information for determining the first EAS for the UE. Correspondingly, the second EES receives, from the first ECS, the second ECS, or the first EES, the information for determining the first EAS for the UE.

For example, the information for determining the first EAS for the UE includes at least one of a PLMN ID corresponding to an EAS associated with the first EES or an ECSP ID corresponding to the EAS associated with the first EES.

Further, the information for determining the first EAS for the UE may further include at least one of a PLMN ID corresponding to the first EAS or an ECSP ID corresponding to the first EAS.

Optionally, after the second EES receives the information for determining the first EAS for the UE, the method 900 further includes: The second EES determines the first EAS based on at least one of the PLMN ID corresponding to the UE or the ECSP ID corresponding to the UE.

Specifically, for descriptions of determining the first EAS for the UE, refer to the descriptions of determining the first EAS by the EES in S402. For brevity, details are not described herein again in this application.

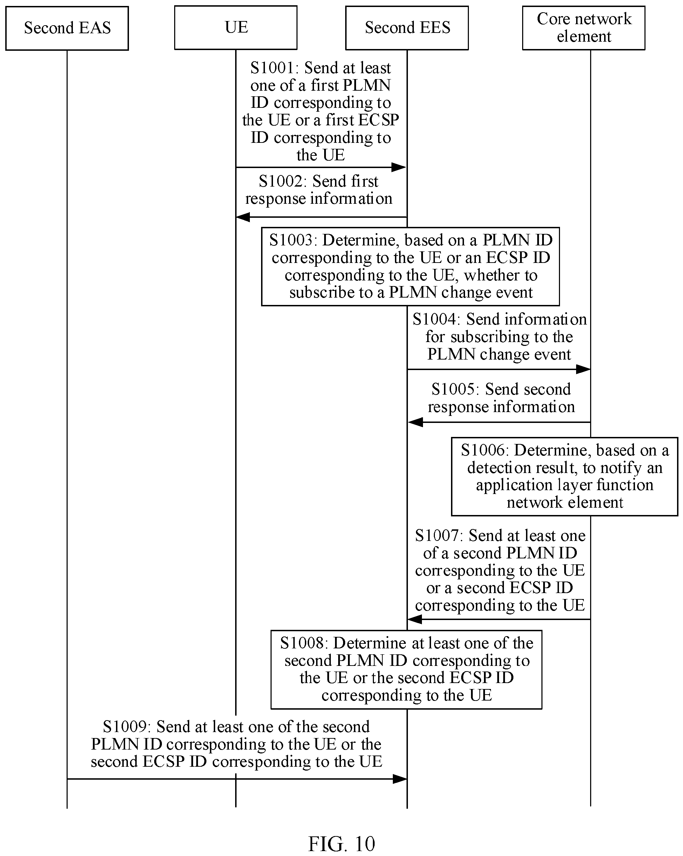

Optionally, to determine at least one of the PLMN ID corresponding to the UE or the ECSP ID corresponding to the UE, the second EES may determine at least one of the PLMN ID corresponding to the UE or the ECSP ID corresponding to the UE by using the information determining method 1000. FIG. 10 is a diagram of an information determining method 1000 according to an embodiment of this application. As shown in FIG. 10, the method 1000 may include the following steps.

S1001: UE sends at least one of a first PLMN ID corresponding to the UE or a first ECSP ID corresponding to the UE to a second EES. Correspondingly, the second EES receives at least one of the first PLMN ID corresponding to the UE or the first ECSP ID corresponding to the UE from the UE.

Optionally, the UE may send at least one of the first PLMN ID corresponding to the UE or the first ECSP ID corresponding to the UE to the second EES. Further, the UE may further send at least one of identity information of the UE, information about an application client (information about a second EAS), or information indicating that the UE has a roaming capability to the second EES.

In an implementation, the UE may send any one of the following messages including the foregoing information to the second EES:
an EAS discovery request (EAS discovery request), an EEC registration request (EEC registration request), and a selected EAS declaration request (Selected EAS declaration request).

In addition, when an EEC detects that an inter-PLMN mobility event occurs on the UE, the EEC may send at least one of the first PLMN ID corresponding to the UE or the first ECSP ID corresponding to the UE to the second EES.

S1002: The second EES sends first response information to the UE. Correspondingly, the UE receives the first response information from the second EES.

Optionally, after receiving at least one of the first PLMN ID corresponding to the UE or the first ECSP ID corresponding to the UE, the second EES may send the first response information to the UE, where the first response information is response information of at least one of the first PLMN ID corresponding to the UE or the first ECSP ID corresponding to the UE.

S1003: The second EES determines whether to subscribe to a PLMN change event from a core network element.

In a possible implementation, if information sent by the UE includes at least one of the first PLMN ID corresponding to the UE or the first ECSP ID corresponding to the UE, or carries the information indicating that the UE has the roaming capability, the second EES may subscribe to the PLMN change (PLMN change) event from the core network element. If information sent by the UE does not include at least one of the first PLMN ID corresponding to the UE or the first ECSP ID corresponding to the UE, the second EES may determine, based on an identity of the UE and subscription information of the UE, whether the UE activates a roaming MEC service, and therefore determine whether to subscribe to the PLMN change (PLMN change) event from a 5GC.

In another possible implementation, the second EES may determine, based on a deployment location of the second EES, whether to subscribe to the PLMN change (PLMN change) event from the 5GC.

S1004: The second EES sends, to the core network element, information for subscribing to the PLMN change event. Correspondingly, the core network element receives, from the second EES, the information for subscribing to the PLMN change event.

For example, the second EES may send an application layer function request (AF request) message to the core network element, where the AF request (AF request) message is used to subscribe to the PLMN change (PLMN change) event.

For example, the second EES may directly send, to a session management function network element serving as the core network element, the information for subscribing to the PLMN change (PLMN change) event, or may send, to the session management function network element via a network exposure function network element, the information for subscribing to the PLMN change (PLMN change) event.

S1005: The core network element sends second response information to the second EES. Correspondingly, the second EES receives the second response information from the core network element.

The second response information is response information of the application layer function request (AF request) message in S1004.

S1006: The core network element determines, based on a detection result, to notify an application layer function network element.

For example, after detecting the PLMN change (PLMN change) event, the session management function network element serving as the core network element notifies the application layer function network element.

S1007: The core network element sends at least one of a second PLMN ID corresponding to the UE or a second ECSP ID corresponding to the UE to the second EES. Correspondingly, the second EES receives at least one of the second PLMN ID corresponding to the UE or the second ECSP ID corresponding to the UE from the core network element.

For example, the session management function network element serving as the core network element may directly send indication information of the PLMN change (PLMN change) event to the second EES, or the session management function network element may send indication information of the PLMN change (PLMN change) event to the second EES via the network exposure function network element. The PLMN change (PLMN change) event may include at least one of the second PLMN ID corresponding to the UE or the second ECSP ID corresponding to the UE.

S 1008: The second EES determines at least one of the second PLMN ID corresponding to the UE or the second ECSP ID corresponding to the UE.

Specifically, after receiving, from the core network element, at least one of the second PLMN ID corresponding to the UE or the second ECSP ID corresponding to the UE, the second EES may determine at least one of the second PLMN ID corresponding to the UE or the second ECSP ID corresponding to the UE.

Further, the second EES may determine whether the inter-PLMN mobility event occurs.

Optionally, the second EES may further determine whether an ACR event occurs.

S1009: The second EAS sends at least one of the second PLMN ID corresponding to the UE or the second ECSP ID corresponding to the UE to the second EES. Correspondingly, the second EES receives at least one of the second PLMN ID corresponding to the UE or the second ECSP ID corresponding to the UE from the second EAS.

It should be understood that at least one of the second PLMN ID corresponding to the UE or the second ECSP ID corresponding to the UE in the foregoing solution is at least one of the PLMN ID corresponding to the UE or the ECSP ID corresponding to the UE in the method 900.

It should be further understood that in the foregoing solution, if S1001 to S1008 are performed, S1009 may not be performed. If S1009 is performed, S1001 to S1008 may not be performed.

Based on the foregoing solution, the first EES selected by the second EES supports a service of the UE, to avoid a problem that application context relocation of the UE fails and the service is affected because the first EES cannot satisfy the service of the UE, and improve user experience.

In addition, a first EAS selected for the UE supports the service of the UE, to avoid a problem that the service is affected because the EAS cannot satisfy the service of the UE and an EAS that is further selected cannot satisfy the service of the UE, and improve user experience.

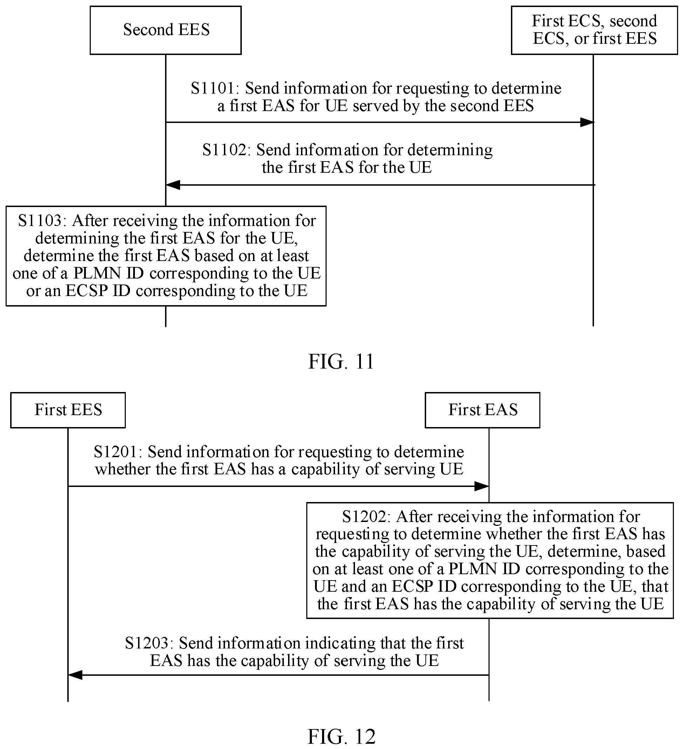

FIG. 11 is a diagram of a device selection method 1100 according to an embodiment of this application. The method 1100 may be combined with another embodiment in this application. For example, the method 1000 may be combined with at least one of a method 400, a method 500, a method 700, a method 900, a method 1000, a method 1400, and a method 1500. As shown in FIG. 11, the method 1100 may include the following steps.

S1101: A second EES sends, to a first ECS, a second ECS, or the first EES, information for requesting to determine a first EAS for UE served by the second EES. Correspondingly, the first ECS, the second ECS, or the first EES receives, from the second EES, the information for requesting to determine the first EAS for the UE served by the second EES.

The information for requesting to determine the first EAS for the UE may include at least one of a PLMN ID corresponding to the UE or an ECSP ID corresponding to the UE.

In an implementation, the second EES may send a service discovery request message to the first ECS, the second ECS, or the first EES, where the service discovery request message includes the information for requesting to determine the first EAS for the UE.

Optionally, the service discovery request message may further include location information of the UE, identity information of the UE, and application client profile (AC profile) information.

S1102: The first ECS or the second ECS sends, to the second EES, a message for determining the first EAS for the UE served by the second EES. Correspondingly, the second EES receives, from the first ECS or the second ECS, the message for determining the first EAS for the UE served by the second EES.

For example, the information for determining the first EAS for the UE includes at least one of a PLMN ID corresponding to an EAS associated with the first EES or an ECSP ID corresponding to the EAS associated with the first EES.

S1103: After the second EES receives the message for determining the first EAS for the UE, the second EES determines the first EAS based on at least one of the PLMN ID corresponding to the UE or the ECSP ID corresponding to the UE.

Specifically, for descriptions of determining the first EAS for the UE, refer to the descriptions of determining the first EAS by the EES in S402. For brevity, details are not described herein again in this application.

Optionally, to determine the first EES of the UE, when the second EES sends, to the first ECS or the second ECS, the information for requesting to determine the first EAS for the UE, the method 1100 further includes: The second EES sends, to the first ECS or the second ECS, information for requesting to determine an EES for the UE. Correspondingly, the first ECS or the second ECS receives, from the second EES, the information for requesting to determine the first EES for the UE.

Optionally, after the first ECS or the second ECS receives, from the second EES, the information for requesting to determine the first EES for the UE, the method 1000 further includes: The first ECS or the second ECS sends, to the second EES, information for determining the first EES for the UE. Correspondingly, the second EES receives, from the first ECS or the second ECS, the information for determining the first EES for the UE.

For example, the information for determining the first EES for the UE may include at least one of a PLMN ID corresponding to the first EES or an ECSP ID corresponding to the first EES.

Optionally, after the second EES receives the information for determining the first EES for the UE, the method 1100 further includes: The second EES determines the first EES based on at least one of the PLMN ID corresponding to the UE or the ECSP ID corresponding to the UE.

Specifically, for descriptions of determining the EES for the UE, refer to the descriptions of determining the EES by the first ECS in S502. For brevity, details are not described herein in this application.

Based on the foregoing solution, in some scenarios (for example, across operators or across ECSPs), the first EAS selected by the second EES supports a service of the UE, to avoid a problem that application context relocation of the UE fails and the service is affected because an EAS cannot satisfy the service of the UE, and improve user experience.

In addition, the first EES selected by the second EES supports the service of the UE, to avoid a problem that the service is affected because the EAS cannot satisfy the service of the UE and an EAS that is further selected cannot satisfy the service of the UE, and improve user experience.

FIG. 12 is a diagram of a device selection method 1200 according to an embodiment of this application. The method 1200 may be combined with another embodiment in this application. For example, the method 1200 may be combined with at least one of a method 400, a method 500, a method 700, a method 900, a method 1000, a method 1400, and a method 1500. As shown in FIG. 12, the method 1200 may include the following steps.

S1201: A first EES sends, to a first EAS, information for requesting to determine whether the first EAS has a capability of serving UE. Correspondingly, the first EAS receives, from the first EES, the information for requesting to determine whether the first EAS has the capability of serving the UE.

The UE provides a service via a second EES.

Specifically, the first EES may send a request message to an EAS that meets an EAS discovery filter condition (a requirement of an AC and/or a requirement for an EAS), to determine whether the EAS has the capability of serving the UE. The first EAS is an EAS that meets the EAS discovery filter condition.

S1202: After the first EAS receives the information for requesting to determine whether the first EAS has the capability of serving the UE, the first EAS determines, based on at least one of a PLMN ID corresponding to the UE or an ECSP ID corresponding to the UE, that the first EAS has the capability of serving the UE.

Specifically, that the first EAS determines, based on at least one of the PLMN ID corresponding to the UE or the ECSP ID corresponding to the UE, that the first EAS has the capability of serving the UE may include at least one of the following manners.

In a possible implementation, the first EAS determines, based on the PLMN ID corresponding to the UE and a PLMN ID corresponding to the first EAS, that the first EAS has the capability of serving the UE.

In another possible implementation, the first EAS determines, based on the ECSP ID corresponding to the UE and an ECSP ID corresponding to the first EAS, that the first EAS has the capability of serving the UE.

At least one of the PLMN ID corresponding to the UE or the ECSP ID corresponding to the UE may be included in subscription information of the UE, and the UE may sign an agreement with an operator or an ECSP, and the operator or the ECSP may provide a roaming network or an edge computing service of a cooperative ECSP for the UE.

S 1203: The first EAS sends, to the first EES, information indicating that the first EAS has the capability of serving the UE. Correspondingly, the first EES receives, from the first EAS, the information indicating that the first EAS has the capability of serving the UE.

Specifically, if the first EAS has the capability of serving the UE, the first EAS may send success information or acknowledgment information to the first EES, where the success information or the acknowledgment information indicates that the first EAS has the capability of serving the UE. If the first EAS does not have the capability of serving the UE, the first EAS sends failure information to the first EES, where the failure information indicates that the first EAS does not have the capability of serving the UE. Optionally, the failure information may carry a failure cause indication, to indicate that the first EAS cannot serve the UE.

Optionally, to obtain at least one of the PLMN ID corresponding to the UE or the ECSP ID corresponding to the UE, the method 1200 further includes: The first EES or a core network element sends at least one of the PLMN ID corresponding to the UE or the ECSP ID corresponding to the UE to the first EAS. Correspondingly, the first EAS receives at least one of the PLMN ID corresponding to the UE or the ECSP ID corresponding to the UE from the first EES or the core network element.

For example, the first EAS may subscribe to a PLMN change (change) event from a 5G core network (5GC), that is, the EES may subscribe to information about the PLMN change event from a session management function network element, or the first EAS may subscribe to the PLMN change event from the session management function network element via a network element function network element. Then, when the session management function network element detects the PLMN change event of the UE, the session management function network element may send a PLMN change event notification message to the first EAS, where the PLMN change event notification message may carry at least one of a UE home PLMN or a UE serving PLMN.

Further, the first EAS may obtain ECSP information of the UE from a unified data management (Unified data management, UDM) network element via the session management function network element.

Based on the foregoing solution, in some scenarios (for example, across operators or across ECSPs), it may be determined that the first EAS supports a service of the UE, to avoid a problem that application context relocation of the UE fails and the service is affected because an EAS cannot satisfy the service of the UE, and improve user experience.

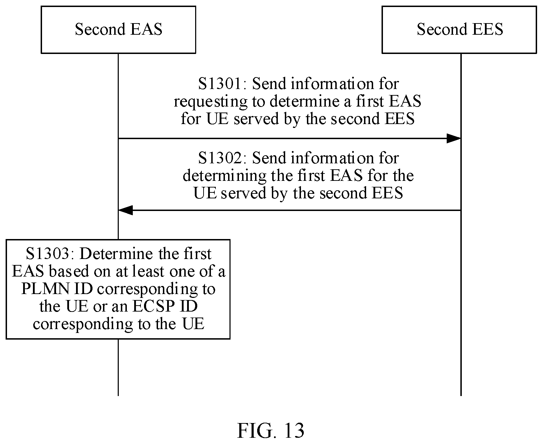

FIG. 13 is a diagram of a device selection method 1300 according to an embodiment of this application. The method 1300 may be combined with another embodiment in this application. For example, the method 1300 may be combined with at least one of a method 400, a method 500, a method 700, a method 900, a method 1000, a method 1400, and a method 1500. As shown in FIG. 13, the method 1300 may include the following steps.

S1301: A second EAS sends, to a second EES, information for requesting to determine a first EAS for UE served by the second EES. Correspondingly, the second EES receives, from the second EAS, the information for requesting to determine the first EAS for the UE.

For example, the information for requesting to determine the first EAS for the UE may include location information of the UE, identity information of the UE, and application client profile (AC profile) information.

In an implementation, the second EAS may send a service discovery request message to the second EES, where the service discovery request message includes the information for requesting to determine the first EAS for the UE.

S1302: The second EES sends, to the second EAS, information for determining the first EAS for the UE served by the second EES. Correspondingly, the second EAS receives, from the second EES, the information for determining the first EAS for the UE served by the second EES.

For example, the information for determining the first EAS for the UE served by the second EES includes at least one of a PLMN ID corresponding to an EAS associated with a first EES or an ECSP ID corresponding to the EAS associated with the first EES.

Further, the second EES may further send at least one of a PLMN ID corresponding to the first EAS, an ECSP ID corresponding to the first EAS, a PLMN ID corresponding to the first EES, or an ECSP ID corresponding to the first EES to the second EAS.

S1302: After the second EAS receives the information for determining the first EAS for the UE served by the second EES, the second EAS determines the first EAS based on at least one of a PLMN ID corresponding to the UE or an ECSP ID corresponding to the UE.

Specifically, the second EAS may determine the first EAS in at least one of the following manners.

In a possible implementation, the second EAS may determine the first EAS based on the PLMN ID corresponding to the EAS associated with the first EES and the PLMN ID corresponding to the UE.

In another possible implementation, the third EAS may determine the first EAS based on the ECSP ID corresponding to the EAS associated with the first EES and the ECSP ID corresponding to the UE.

The first EAS is an EAS associated with the first EES.

Optionally, to obtain at least one of the PLMN ID corresponding to the UE or the ECSP ID corresponding to the UE of the second EES, the method 1300 further includes: The second EAS receives at least one of the PLMN ID corresponding to the UE or the ECSP ID corresponding to the UE from the second EES. Correspondingly, the second EES sends at least one of the PLMN ID corresponding to the UE or the ECSP ID corresponding to the UE to the second EAS.

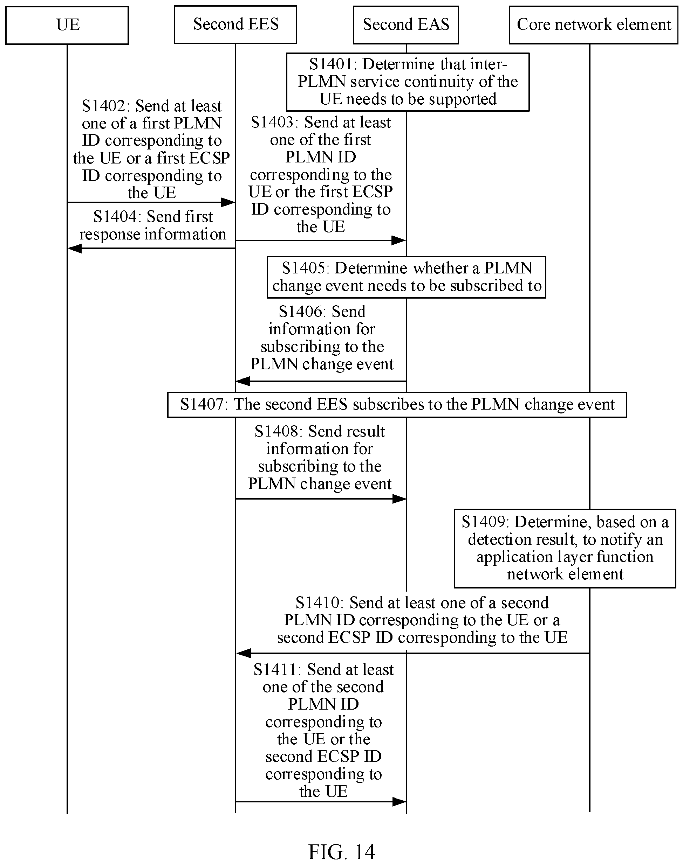

Specifically, the second EAS may receive, by using the information determining method 1300, at least one of the PLMN ID corresponding to the UE or the ECSP ID corresponding to the UE from the second EES. FIG. 14 is a diagram of an information determining method 1400 according to an embodiment of this application. As shown in FIG. 14, the method 1400 may include the following steps.

S1401: A second EAS determines that inter-PLMN service continuity of UE needs to be supported.

In a possible implementation, the second EAS may determine, based on subscription information of the UE or a deployment location of the second EAS, that the inter-PLMN service continuity of the UE needs to be supported.

In another possible implementation, the second EAS may receive indication information indicating that the UE needs to support the inter-PLMN service continuity of the UE, and the second EAS may determine, based on the indication information, that the inter-PLMN service continuity of the UE needs to be supported.

The indication information indicating that the inter-PLMN service continuity of the UE needs to be supported may include information about the second EAS, information indicating whether the UE is a user who activates inter-PLMN mobility, and the like.

S1402: The UE sends at least one of a first PLMN ID corresponding to the UE or a first ECSP ID corresponding to the UE to a second EES. Correspondingly, the second EES receives at least one of the first PLMN ID corresponding to the UE or the first ECSP ID corresponding to the UE from the UE.

Optionally, the UE may send at least one of the first PLMN ID corresponding to the UE or the first ECSP ID corresponding to the UE to the second EES. Further, the UE may further send at least one of identity information of the UE, information about an application client (the information about the second EAS), or information indicating that the UE has a roaming capability to the second EES.

In an implementation, the UE may send any one of the following messages including the foregoing information to the second EES:
an EAS discovery request (EAS discovery request), an EEC registration request (EEC registration request), a selected EAS declaration request (Selected EAS declaration request), an EAS discovery request update (EAS discovery request update), an EAS discovery subscription request (EAS discovery subscription request), and an EAS discovery subscription update request (EAS discovery subscription update request).

In addition, when an EEC detects that an inter-PLMN mobility event occurs on the UE, the EEC may send at least one of the first PLMN ID corresponding to the UE or the first ECSP ID corresponding to the UE to the second EES.

S1403: The second EES sends at least one of the first PLMN ID corresponding to the UE or the first ECSP ID corresponding to the UE to the second EAS. Correspondingly, the second EAS receives at least one of the first PLMN ID corresponding to the UE or the first ECSP ID corresponding to the UE from the second EES.

Optionally, after receiving at least one of the first PLMN ID corresponding to the UE or the first ECSP ID corresponding to the UE, the second EES may send at least one of the first PLMN ID corresponding to the UE or the first ECSP ID corresponding to the UE to the second EAS.

S1404: The second EES sends first response information to the UE. Correspondingly, the UE receives the first response information from the second EES.

Optionally, after receiving at least one of the first PLMN ID corresponding to the UE or the first ECSP ID corresponding to the UE, the second EES may send the first response information to the UE. The first response information is response information of at least one of the first PLMN ID corresponding to the UE or the first ECSP ID corresponding to the UE.

S1405: The second EAS determines whether a PLMN change event needs to be subscribed to.

In a possible implementation, after the application client and the second EAS are connected and run, the second EAS may obtain the information about the application client and information about the UE and determine, based on the information about the application client and the information about the UE, whether the PLMN change (PLMN change) event needs to be subscribed to.

For example, the second EAS may determine, based on the subscription information of the UE or the deployment location of the second EAS, that the PLMN change event needs to be subscribed to.

In another possible implementation, the second EAS may determine, based on the identity information of the UE sent by the second EES, whether the PLMN change (PLMN change) event needs to be subscribed to.

In still another possible implementation, the second EAS may receive, from the second EES, indication information indicating that the UE needs to subscribe to the PLMN change (PLMN change) event, and the second EAS may determine, based on the indication information, that the PLMN change (PLMN change) event needs to be subscribed to.

The indication information indicating that the PLMN change (PLMN change) event needs to be subscribed to may include the information about the second EAS, and the information indicating whether the UE is the user who activates the inter-PLMN mobility, and the like.

S1406: The second EAS sends, to the second EES, information for subscribing to the PLMN change event. Correspondingly, the second EES receives, from the second EAS, the information for subscribing to the PLMN change event.

The information for subscribing to the PLMN change event may carry the identity information of the UE and indication information indicating that a type of a subscribed event is the PLMN change (PLMN change) event.

In a possible implementation, the second EAS may send an ACR management event subscription request (ACR management event subscribe request) message to the second EES, where the ACR management event subscription request may include subscription event information, and the subscription event information may indicate that a type of a subscribed ACR management event (for example, the PLMN change event is subscribed to) is PLMN change.

S1407: The second EES subscribes to the PLMN change event.

For example, the second EES may send an application layer function request (AF request) message to a core network element, where the application layer function request (AF request) message is used to subscribe to the PLMN change (PLMN change) event.

For example, the second EES may send the application layer function request (AF request) message to a session management function network element, or the second EES may send the application layer function request (AF request) message to the session management function network element via a network element function network element.

S1408: The second EES sends, to the second EAS, response information for subscribing to the PLMN change event. Correspondingly, the second EAS receives, from the second EES, the response information for subscribing to the PLMN change event.

The response information for subscribing to the PLMN change event indicates a success or a failure of subscribing to the PLMN change event.

S1409: The core network element determines, based on a detection result, to notify an application layer function network element.

For example, after detecting the PLMN change (PLMN change) event, the session management function network element serving as the core network element notifies the application layer function network element.

S1410: The core network element sends at least one of a second PLMN ID corresponding to the UE or a second ECSP ID corresponding to the UE to the second EES. Correspondingly, the second EES receives at least one of the second PLMN ID corresponding to the UE or the second ECSP ID corresponding to the UE from the core network element.

For example, the session management function network element serving as the core network element may directly send indication information of the PLMN change (PLMN change) event to the second EES, or the session management function network element may send indication information of the PLMN change (PLMN change) event to the second EES via a network exposure function network element. The PLMN change (PLMN change) event may include at least one of the second PLMN ID corresponding to the UE or the second ECSP ID corresponding to the UE.

S1411: The second EES sends at least one of the second PLMN ID corresponding to the UE or the second ECSP ID corresponding to the UE to the second EAS. Correspondingly, the second EAS receives at least one of the second PLMN ID corresponding to the UE or the second ECSP ID corresponding to the UE from the second EES.

Specifically, the second EES may send an ACR management event notification message to the second EAS, to indicate that the PLMN change event occurs on the UE. Then, the second EES may send at least one of the second PLMN ID corresponding to the UE or the second ECSP ID corresponding to the UE to the second EAS.

In addition, if the second EES determines, by using the foregoing method 1000, at least one of the second PLMN ID corresponding to the UE or the second ECSP ID corresponding to the UE, the second EES may directly send at least one of the second PLMN ID corresponding to the UE or the second ECSP ID corresponding to the UE to the second EAS, and the method 1400 is not performed.

It should be understood that at least one of the second PLMN ID corresponding to the UE or the second ECSP ID corresponding to the UE in the foregoing solution is at least one of the PLMN ID corresponding to the UE or the ECSP ID corresponding to the UE in the method 1300.

Based on the foregoing solution, in some scenarios (for example, across operators or across ECSPs), a first EAS selected for the UE supports a service of the UE, to avoid a problem that application context relocation of the UE fails and the service is affected because the first EAS cannot satisfy the service of the UE, and improve user experience.

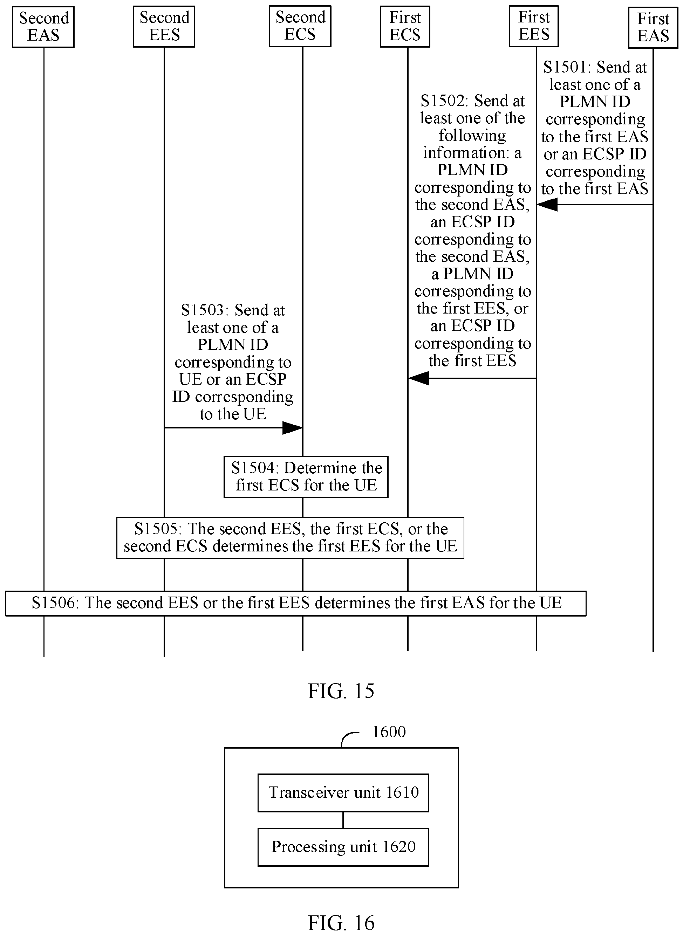

FIG. 15 is a diagram of a device selection method 1500 according to an embodiment of this application. The method 1500 may be combined with another embodiment in this application. For example, the method 1500 may be combined with at least one of a method 400 to a method 1400. As shown in FIG. 15, the method 1500 may include the following steps.

S1501: A first EAS sends at least one of a PLMN ID corresponding to the first EAS or an ECSP ID corresponding to the first EAS to a first EES. Correspondingly, the first EES receives at least one of the PLMN ID corresponding to the first EAS or the ECSP ID corresponding to the first EAS from the first EAS.

The information may identify whether the first EAS can serve roaming UE, or whether the first EAS can serve a user of a cooperative ECSP.

In a possible implementation, the first EAS may send an EAS registration request message (EAS registration (update) request) to the first EES, where the EAS registration request message carries at least one of the PLMN ID corresponding to the first EAS or the ECSP ID corresponding to the first EAS. Further, the foregoing information may be stored in an EAS profile (EAS profile).

In addition, at least one of the PLMN ID corresponding to the first EAS or the ECSP ID corresponding to the first EAS may alternatively be carried in any one of the following messages. A specific bearer message is not limited:
a UE location (update) request (UE location (update) request), a UE location subscription (update) request (UE location subscribe (update) request), an ACR management event (update) subscription request (ACR management event (update) subscribe request), an application client information subscription (update) request (AC information subscription (update) request), a UE identifier API (update) request (UE identifier API (update) request), and a session with quality of service create (update) request (Session with QoS create (update) request).

Optionally, after receiving the registration request message, the first EES may store information included in the registration request message, and send a registration (update) response message to the first EAS.

S1502: The first EES sends, to a first ECS, at least one of the following information: the PLMN ID corresponding to the first EAS, the ECSP ID corresponding to the first EAS, a PLMN ID corresponding to the first EES, or an ECSP ID corresponding to the first EES. Correspondingly, the first ECS receives at least one of the foregoing information from the first EES.

The at least one of the foregoing information may identify whether the first EAS can serve the roaming UE, whether the first EAS can serve the user of the cooperative ECSP, whether the first EES can serve the roaming UE, whether the first EES can serve the user of the cooperative ECSP, or whether an EAS associated with the first EES can serve the roaming UE or serve the user of the cooperative ECSP.

In an implementation, the first EES may send a service registration request message to the first ECS, where the service registration request message includes the at least one of the foregoing information.

In addition, the at least one of the foregoing information may alternatively be carried in any other message between the first EES and the first ECS. This is not limited herein in this application.

Further, when the foregoing information may include at least one of information about the PLMN ID corresponding to the first EES or the ECSP ID corresponding to the first EES, the method 400 further includes at least one of the following:
In a possible implementation, the first EES may determine, based on the PLMN ID corresponding to the first EAS, the PLMN ID corresponding to the first EES.

In another possible implementation, the first EES may determine, based on the ECSP ID corresponding to the first EAS, the ECSP ID corresponding to the first EES.

In addition, after the first EES sends the service registration request message to the first ECS, the first EES may receive a registration (update) response message from the first ECS.

Optionally, the first ECS may send at least one of a PLMN supported by the first ECS or an ECSP supported by the first ECS to a second ECS. Further, the first ECS may further send at least one of the PLMN ID corresponding to the EES, the ECSP ID corresponding to the EES, the PLMN ID corresponding to the first EAS, or the ECSP ID corresponding to the first EAS to the second ECS.

S1503: A second EES sends at least one of a PLMN ID corresponding to UE or an ECSP ID corresponding to the UE to the second ECS. Correspondingly, the second ECS receives at least one of the PLMN ID corresponding to the UE or the ECSP ID corresponding to the UE from the second EES.

The UE provides a service via the second EES.

For example, when the UE needs an edge computing service, the second EES may send at least one of the PLMN ID corresponding to the UE or the ECSP ID corresponding to the UE to the second ECS (for example, the second ECS may be an ECS of a home operator or an ECSP of the UE, an ECS preconfigured for the UE, or an ECS delivered by a core network element).

In an implementation, at least one of the PLMN ID corresponding to the UE or the ECSP ID corresponding to the UE may be carried in a service provisioning request (Service provisioning request) message, and the service provisioning request message may request the second ECS to determine an ECS (for example, the first ECS) for the UE.

Optionally, the service provisioning request message may further carry at least one of an identifier of the UE, an application client profile (AC profile), or a location (UE location) of the UE. Further, the service provisioning request message may further carry indication information indicating whether only an EAS provided by a home operator/ECSP can be used, indication information indicating whether the EAS provided by the home operator/home ECSP is preferentially selected, an ECS of a PLMN ID that is preferentially selected, an ECS of an ECSP ID that is preferentially selected, a list of PLMN IDs that are preferentially selected, a list of ECSP IDs that are preferentially selected, an ECS of a specified PLMN ID, or an ECS of a specified ECSP ID.

S1504: The second ECS determines the first ECS for the UE.

Specifically, after the second ECS receives the service provisioning request message, the second ECS may determine the first ECS for the UE based on identification information of the UE and at least one of the PLMN ID corresponding to the UE or the ECSP ID corresponding to the UE. Further, the second ECS may further select and determine, based on service information requested by the UE, or based on at least one of a PLMN ID supported by the second ECS or an ECSP ID supported by the second ECS, that there is a need to relocate to the second ECS (a network of a visited operator or a network of the cooperative ECSP).

In a possible implementation, after the second ECS determines the first ECS for the UE, the second ECS may send information about the first ECS to the second EES. For example, the information about the first ECS may include configuration information of the first ECS or address information of the first ECS.

For example, the second ECS may send a service provisioning response message to the second EES, where the service provisioning response message may include the information about the first ECS.

Then, the second EES may send the identification information of the UE, application client profile (AC profile) information, and at least one of the PLMN ID corresponding to the UE or the ECSP ID corresponding to the UE to the first ECS.

For example, the second EES may send a service provisioning request message to the first ECS, where the service provisioning request message may carry the foregoing information, to indicate the first ECS to select, for the UE, an EES (for example, the first EES in this embodiment) that supports the PLMN or the ECSP.

In another possible implementation, after the second ECS determines the first ECS for the UE, the second ECS may send the identification information of the UE, application client profile (AC profile) information, and at least one of the PLMN ID corresponding to the UE or the ECSP ID corresponding to the UE to the first ECS.

For example, the second ECS may send a service provisioning request message to the first ECS, where the service provisioning request message may carry the foregoing information, to indicate the first ECS to select, for the UE, an EES (for example, the first EES in this embodiment) that supports the PLMN or the ECSP.

S1505: The second EES, the first ECS, or the second ECS determines the first EES for the UE.

Optionally, the UE, the first ECS, or the second ECS may determine an EES for the UE.

Specifically, for descriptions of determining the first EES by the second EES, refer to the descriptions of determining the first EES by the second EES in the method 900. For descriptions of determining the first EES by the first ECS, refer to the descriptions of determining the first EES by the first ECS in the method 500. For descriptions of determining the first EES by the second ECS, refer to the descriptions of determining the first EES by the second ECS in the method 700. For brevity, details are not described herein in this application.

S1506: The second EES or the first EES determines the first EAS for the UE.

Specifically, for descriptions of determining the first EAS by the second EES, refer to the descriptions of determining the first EAS by the second EES in the method 1100. For descriptions of determining the first EAS by the first EES, refer to the descriptions of determining the first EAS by the first EES in the method 400. For brevity, details are not described herein in this application.

In another implementation, the first ECS, the second ECS, the first EAS, or the second EAS may alternatively determine the first EAS for the UE.

Specifically, for descriptions of determining the first EAS by the first ECS, refer to the descriptions of determining the first EAS by the first ECS in the method 600. For descriptions of determining the first EAS by the second ECS, refer to the descriptions of determining the first EAS by the second ECS in the method 800. For descriptions of determining the first EAS by the first EAS, refer to the descriptions of determining the first EAS by the first EAS in the method 1200. For descriptions of determining the first EAS by the second EAS, refer to the descriptions of determining the first EAS by the first EAS in the method 1300. For brevity, details are not described herein in this application.

It should be understood that, in the foregoing solution, if only the first EAS needs to be determined for the UE, S1502 and S1505 may not be performed. If only the first EES needs to be determined for the UE, S1206 may not be performed.

Based on the foregoing solution, in some scenarios (for example, across operators or across ECSPs), the first EAS is determined, based on at least one of the PLMN ID corresponding to the UE or the ECSP ID corresponding to the UE, for the UE served by the second EES. Optionally, the first EES may be further determined for the UE based on at least one of the PLMN ID corresponding to the UE or the ECSP ID corresponding to the UE. Further, the first EAS or the first EES selected for the UE served by the second EES supports a service of the UE, to avoid a problem that application context relocation of the UE fails and the service is affected because the EES or the EAS cannot satisfy the service of the UE, and improve user experience.

In addition, if it is determined that no EES supports the service of the UE, failure indication information may be returned to the second EES. Therefore, it is avoided that the second EES still initiates a service when no EES supports the service of the UE.

It may be understood that in the foregoing method embodiments, methods and operations implemented by the terminal device may alternatively be implemented by a component (for example, a chip or a circuit) that may be used in the terminal device, and methods and operations implemented by the network device may alternatively be implemented by a component (for example, a chip or a circuit) that may be used in the network device.

The foregoing describes in detail the methods provided in embodiments of this application with reference to FIG. 4 to FIG. 15. The following describes in detail a communication apparatus provided in embodiments of this application with reference to FIG. 16 to FIG. 18. It should be understood that descriptions of apparatus embodiments correspond to the descriptions of the method embodiments. Therefore, for content that is not described in detail, refer to the method embodiments. For brevity, details are not described herein again.

The foregoing mainly describes the solutions provided in embodiments of this application from the perspective of interaction between network elements. It may be understood that, to implement the foregoing functions, each network element, for example, a transmitter device or a receiver device, includes a corresponding hardware structure and/or software module for performing each function. A person skilled in the art should be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A skilled person may use different methods to implement the described functions for each particular application, but it should not be considered that the implementation goes beyond the scope of this application.

In embodiments of this application, the transmitter device or the receiver device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation. The following provides descriptions by using an example in which each functional module is obtained through division based on each corresponding function.

FIG. 16 is a block diagram of a communication apparatus 1600 according to an embodiment of this application. The communication apparatus 1600 includes a transceiver unit 1610 and a processing unit 1620. The transceiver unit 1610 may implement a corresponding communication function, and the processing unit 1610 is configured to perform data processing. The transceiver unit 1610 may also be referred to as a communication interface or a communication unit.

Optionally, the communication apparatus 1600 may further include a storage unit. The storage unit may be configured to store instructions and/or data. The processing unit 1620 may read the instructions and/or the data in the storage unit, so that the communication apparatus implements the foregoing method embodiments.

The communication apparatus 1600 may be configured to perform an action performed by the second EES in the foregoing method embodiments. In this case, the communication apparatus 1600 may be the second EES or a component that may be configured in the second EES. The transceiver unit 1610 is configured to perform operations related to receiving and sending on a second EES side in the foregoing method embodiments, and the processing unit 1620 is configured to perform an operation related to processing on the second EES side in the foregoing method embodiments.

Alternatively, the communication apparatus 1600 may be configured to perform an action performed by the first EAS in the foregoing method embodiments. In this case, the communication apparatus 1600 may be the first EAS or a component that may be configured in the first EAS. The transceiver unit 1610 is configured to perform operations related to receiving and sending on a first EAS side in the foregoing method embodiments, and the processing unit 1620 is configured to perform an operation related to processing on the first EAS side in the foregoing method embodiments.

Alternatively, the communication apparatus 1600 may be configured to perform an action performed by the first EES in the foregoing method embodiments. In this case, the communication apparatus 1600 may be the first EES or a component that may be configured in the first EES. The transceiver unit 1610 is configured to perform operations related to receiving and sending on a first EES side in the foregoing method embodiments, and the processing unit 1620 is configured to perform an operation related to processing on the first EES side in the foregoing method embodiments.

Alternatively, the communication apparatus 1600 may be configured to perform an action performed by the first ECS in the foregoing method embodiments. In this case, the communication apparatus 1600 may be the first ECS or a component that may be configured in the first ECS. The transceiver unit 1610 is configured to perform operations related to receiving and sending on a first ECS side in the foregoing method embodiments, and the processing unit 1620 is configured to perform an operation related to processing on the first ECS side in the foregoing method embodiments.

Alternatively, the communication apparatus 1600 may be configured to perform an action performed by the second ECS in the foregoing method embodiment. In this case, the communication apparatus 1600 may be the second ECS or a component that may be configured in the second ECS. The transceiver unit 1610 is configured to perform operations related to receiving and sending on a second ECS side in the foregoing method embodiments, and the processing unit 1620 is configured to perform an operation related to processing on the second ECS side in the foregoing method embodiments.

Alternatively, the communication apparatus 1600 may be configured to perform an action performed by the second EAS in the foregoing method embodiments. In this case, the communication apparatus 1600 may be the second EAS or a component that may be configured in the second EAS. The transceiver unit 1610 is configured to perform operations related to receiving and sending on a second EAS side in the foregoing method embodiments, and the processing unit 1620 is configured to perform an operation related to processing on the second EAS side in the foregoing method embodiments.

In an example, the communication apparatus 1600 may implement corresponding steps or procedures performed by the second EES in the method 400 to the method 1100 and the method 1300 to the method 1500 according to embodiments of this application, and the communication apparatus 1600 may include units configured to perform the method performed by the second EES in the method 400 in FIG. 4 to the method 1100 in FIG. 11 and the method 1300 in FIG. 1300 to the method 1500 in FIG. 1500. In addition, the units in the communication apparatus 1600 and the foregoing other operations and/or functions are separately used to implement corresponding procedures in the method 400 in FIG. 4 to the method 1100 in FIG. 11 and the method 1300 in FIG. 1300 to the method 1500 in FIG. 1500.

In another example, the communication apparatus 1600 may implement corresponding steps or procedures performed by the first EES in the method 400, the method 1200, and the method 1500 according to embodiments of this application, and the communication apparatus 1600 may include units configured to perform the method performed by the first EES in the method 400 in FIG. 4, the method 1200 in FIG. 12, and the method 1500 in FIG. 15. In addition, the units in the communication apparatus 1600 and the foregoing other operations and/or functions are separately used to implement corresponding procedures in the method 400 in FIG. 4, the method 1200 in FIG. 12, and the method 1500 in FIG. 15.

In another example, the communication apparatus 1600 may implement corresponding steps or procedures performed by the first ECS in the method 500, the method 600, and the method 1500 according to embodiments of this application, and the communication apparatus 1600 may include units configured to perform the method performed by the first ECS in the method 500 in FIG. 5, the method 600 in FIG. 6, and the method 1500 in FIG. 15. In addition, the units in the communication apparatus 1600 and the foregoing other operations and/or functions are separately used to implement corresponding procedures in the method 500 in FIG. 5, the method 600 in FIG. 6, and the method 1200 in FIG. 15.

In another example, the communication apparatus 1600 may implement corresponding steps or procedures performed by the second ECS in the method 500, the method 700 to the method 900, the method 1100, and the method 1500 according to embodiments of this application, and the communication apparatus 1600 may include units configured to perform the method performed by the second ECS in the method 500 in FIG. 5, the method 700 in FIG. 7 to the method 900 in FIG. 9, the method 1100 in FIG. 11, and the method 1500 in FIG. 15. In addition, the units in the communication apparatus 1600 and the foregoing other operations and/or functions are separately used to implement corresponding procedures in the method 500 in FIG. 5, the method 700 in FIG. 7 to the method 900 in FIG. 9, the method 1100 in FIG. 11, and the method 1500 in FIG. 15.

In another example, the communication apparatus 1600 may implement corresponding steps or procedures performed by the first EAS in the method 1200 and the method 1500 according to embodiments of this application, and the communication apparatus 1600 may include units configured to perform the method performed by the first EAS in the method 1200 in FIG. 12 and the method 1500 in FIG. 15. In addition, the units in the communication apparatus 1600 and the foregoing other operations and/or functions are separately used to implement corresponding procedures in the method 1200 in FIG. 12 and the method 1500 in FIG. 15.

In another example, the communication apparatus 1600 may implement corresponding steps or procedures performed by the second EAS in the method 1000 and the method 1300 to the method 1500 according to embodiments of this application, and the communication apparatus 1600 may include units configured to perform the method performed by the second EAS in the method 1000 in FIG. 10, and the method 1300 in FIG. 13 to the method 1500 in FIG. 15. In addition, the units in the communication apparatus 1600 and the foregoing other operations and/or functions are separately used to implement corresponding procedures in the method 1000 in FIG. 10 and the method 1300 in FIG. 13 to the method 1500 in FIG. 15.

It should be understood that a specific process in which the units perform the foregoing corresponding steps is described in detail in the method embodiments. For brevity, details are not described herein.

The processing unit 1620 in the foregoing embodiment may be implemented as at least one processor or a processor-related circuit. The transceiver unit 1610 may be implemented as a transceiver or a transceiver-related circuit. The transceiver unit 1610 may also be referred to as a communication unit or a communication interface. The storage unit may be implemented as at least one memory.

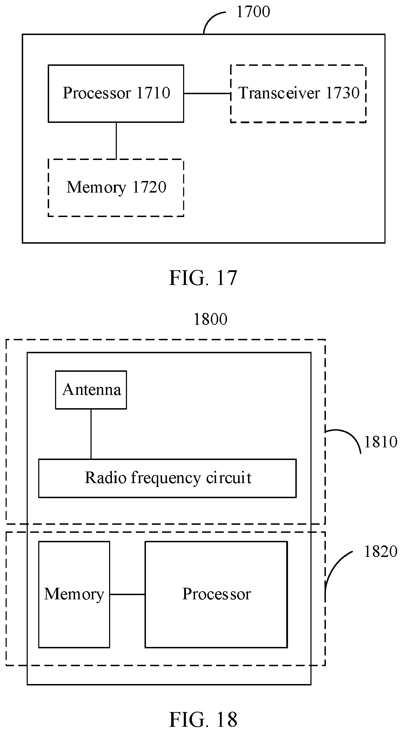

As shown in FIG. 17, an embodiment of this application further provides a communication apparatus 1700. The communication apparatus 1700 includes a processor 1710. The processor 1710 is coupled to a memory 1720. The memory 1720 is configured to store a computer program or instructions and/or data. The processor 1710 is configured to execute the computer program or the instructions and/or the data stored in the memory 1720, so that the methods in the foregoing method embodiments are performed.

Optionally, the communication apparatus 1700 includes one or more processors 1710.

Optionally, as shown in FIG. 17, the communication apparatus 1700 may further include the memory 1720.

Optionally, the communication apparatus 1700 may include one or more memories 1720.

Optionally, the memory 1720 and the processor 1710 may be integrated or disposed separately.

Optionally, as shown in FIG. 17, the communication apparatus 1700 may further include a transceiver 1730. The transceiver 1730 is configured to receive and/or send a signal. For example, the processor 1710 is configured to control the transceiver 1730 to receive and/or send a signal.

In a solution, the communication apparatus 1700 is configured to implement operations performed by the second EES in the foregoing method embodiments.

For example, the processor 1710 is configured to implement a processing-related operation performed by the second EES in the foregoing method embodiments, and the transceiver 1730 is configured to implement receiving and sending-related operations performed by the second EES in the foregoing method embodiments.

In another solution, the communication apparatus 1700 is configured to implement operations performed by the first EES in the foregoing method embodiments.

For example, the processor 1710 is configured to implement a processing-related operation performed by the first EES in the foregoing method embodiments, and the transceiver 1730 is configured to implement receiving and sending-related operations performed by the first EES in the foregoing method embodiments.

In another solution, the communication apparatus 1700 is configured to implement operations performed by the first ECS in the foregoing method embodiments.

For example, the processor 1710 is configured to implement a processing-related operation performed by the first ECS in the foregoing method embodiments, and the transceiver 1730 is configured to implement receiving and sending-related operations performed by the first ECS in the foregoing method embodiments.

In another solution, the communication apparatus 1700 is configured to implement operations performed by the second ECS in the foregoing method embodiments.

For example, the processor 1710 is configured to implement a processing-related operation performed by the second ECS in the foregoing method embodiments, and the transceiver 1730 is configured to implement receiving and sending-related operations performed by the second ECS in the foregoing method embodiments.

In another solution, the communication apparatus 1700 is configured to implement operations performed by the first EAS in the foregoing method embodiments.

For example, the processor 1710 is configured to implement a processing-related operation performed by the first EAS in the foregoing method embodiments, and the transceiver 1730 is configured to implement receiving and sending-related operations performed by the first EAS in the foregoing method embodiments.

In another solution, the communication apparatus 1700 is configured to implement operations performed by the second EAS in the foregoing method embodiments.

For example, the processor 1710 is configured to implement a processing-related operation performed by the second EAS in the foregoing method embodiments, and the transceiver 1730 is configured to implement receiving and sending-related operations performed by the second EAS in the foregoing method embodiments.

An embodiment of this application further provides a communication apparatus 1800. The communication apparatus 1800 may be a network device or a chip. The communication apparatus 1800 may be configured to perform operations performed by the network device in the foregoing method embodiments. The network device may include at least one of a first EES, a first ECS, a second ECS, a first EAS, or a second EAS.

FIG. 18 is a simplified diagram of a structure of a network device 1800. The network device includes a part 1810 and a part 1820. The part 1810 is mainly configured to receive and send a radio frequency signal and perform conversion between the radio frequency signal and a baseband signal. The part 1820 is mainly configured to process a signal, control the network device, and the like. The part 1810 may be usually referred to as a transceiver unit, a transceiver, a transceiver circuit, a transceiver machine, or the like. The part 1820 is usually a control center of the network device, may be usually referred to as a processing unit, and is configured to control the network device to perform a processing operation on a network device side in the foregoing method embodiments.

The transceiver unit in the part 1810 may also be referred to as a transceiver, a transceiver machine, or the like, and includes an antenna and a radio frequency circuit. The radio frequency circuit is mainly configured to perform radio frequency processing. Optionally, a component configured to implement a receiving function in the part 1810 may be considered as a receiving unit, and a component configured to implement a sending function may be considered as a sending unit. In other words, the part 1810 includes the receiving unit and the sending unit. The receiving unit may also be referred to as a receiver, a receiver machine, a receiver circuit, or the like. The sending unit may be referred to as a transmitter, a transmitter machine, a transmitter circuit, or the like.

The part 1820 may include one or more boards, and each board may include one or more processors and one or more memories. The processor is configured to read and execute a program in the memory to implement a baseband processing function and control a base station. If there are a plurality of boards, the boards may be interconnected with each other, to enhance a processing capability. In an optional implementation, a plurality of boards may share one or more processors, a plurality of boards may share one or more memories, or a plurality of boards may simultaneously share one or more processors.

For example, in an implementation, the processing unit 1820 is configured to perform a processing action on a first EES side in FIG. 4, FIG. 12, or FIG. 15, and the transceiver unit 1810 is configured to perform receiving and sending actions on the first EES side in FIG. 4, FIG. 12, or FIG. 15.

For another example, in an implementation, the processing unit 1820 is configured to perform a processing action on a second EES side in any one of FIG. 4 to FIG. 11 and FIG. 13 to FIG. 15, and the transceiver unit 810 is configured to perform receiving and sending actions on the second EES side in any one of FIG. 4 to FIG. 11 and FIG. 13 to FIG. 15.

For another example, in an implementation, the processing unit 1820 is configured to perform a processing action on a first ECS side in FIG. 5, FIG. 6, or FIG. 15, and the transceiver unit 810 is configured to perform receiving and sending actions on the first ECS side in FIG. 5, FIG. 6, or FIG. 15.

For another example, in an implementation, the processing unit 1820 is configured to perform a processing action on a second ECS side in FIG. 5, FIG. 7, FIG. 8, FIG. 9, FIG. 11, or FIG. 15, and the transceiver unit 1810 is configured to perform receiving and sending actions on the second ECS side in FIG. 5, FIG. 7, FIG. 8, FIG. 9, FIG. 11, or FIG. 15.

For another example, in an implementation, the processing unit 1820 is configured to perform a processing action on a first EAS side in FIG. 12 or FIG. 15, and the transceiver unit 1810 is configured to perform receiving and sending actions on the first EAS side in FIG. 12 or FIG. 15.

For another example, in an implementation, the processing unit 1820 is configured to perform a processing action on a second EAS side in FIG. 10, FIG. 13, FIG. 14, or FIG. 15, and the transceiver unit 1810 is configured to perform receiving and sending actions on the second EAS side in FIG. 10, FIG. 13, FIG. 14, or FIG. 15.

It should be understood that FIG. 18 is merely an example rather than a limitation, and the foregoing network device including the transceiver unit and the processing unit may not depend on the structure shown in FIG. 18.

When the communication apparatus 1800 is a chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides a computer-readable storage medium. The computer-readable storage medium stores computer instructions used to implement the method performed by the first EES, the method performed by the second EES, the method performed by the first ECS, the method performed by the second ECS, the method performed by the first EAS, or the method performed by the second EAS in the foregoing method embodiments.

For example, when the computer program is executed by a computer, the computer is enabled to implement the method performed by the first EES, the method performed by the second EES, the method performed by the first ECS, the method performed by the second ECS, the method performed by the first EAS, or the method performed by the second EAS in the foregoing method embodiments.

An embodiment of this application further provides a computer program product including instructions. When the instructions are executed by a computer, the computer is enabled to implement the method performed by the first EES, the method performed by the second EES, the method performed by the first ECS, the method performed by the second ECS, the method performed by the first EAS, or the method performed by the second EAS in the foregoing method embodiments.

An embodiment of this application further provides a device selection system. The device selection system includes one or more of the following execution bodies described above:
a first EES, a first EAS, a first ECS, a second ECS, a second EES, or a second EAS.

It may be clearly understood by a person skilled in the art that, for the purpose of convenient and brief description, for explanations and beneficial effects of related content in any communication apparatus provided above, refer to the corresponding method embodiments provided above. Details are not described herein again.

In embodiments of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be performed by the terminal device or the network device, or may be a functional module that can invoke and execute the program in the terminal device or the network device.

Various aspects or features of this application may be implemented as methods, apparatuses, or products using standard programming and/or engineering techniques. The term "product" used in this specification may cover a computer program that can be accessed from any computer-readable component, carrier, or medium.

The computer-readable storage medium may be any usable medium accessible to the computer, or a data storage device, for example, a server or a data center, integrating one or more usable media. The usable medium (or computer-readable medium) may include, for example, but is not limited to, various media that can store program code, such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, a flash memory device (for example, an erasable programmable read-only memory (erasable programmable read-only memory, EPROM), a card, a stick, or a key drive), a semiconductor medium (for example, a solid state disk (solid state disk, SSD)), a USB flash drive, a read-only memory (read-only memory, ROM), or a random access memory (random access memory, RAM).

Various storage media described in this specification may indicate one or more devices and/or other machine-readable media that are configured to store information. The term "machine-readable medium" may include but is not limited to a radio channel and various other media that can store, contain and/or carry instructions and/or data.

It should be understood that the processor mentioned in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, a memory (storage module) may be integrated into the processor.

It should be further noted that the memory described in this specification is intended to include but is not limited to these memories and any memory of another proper type.

In the several embodiments provided in this application, it should be understood that the disclosed apparatuses and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, and may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof.

When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scopes of the claims and the specification.

## Claims

1. A device selection method, comprising:
receiving, by a first edge enabler server EES from a second EES, information for requesting to determine a first edge application server EAS for a terminal device UE served by the second EES;
after the first EES receives the information for requesting to determine the first EAS for the UE served by the second EES, determining, by the first EES, the first EAS based on at least one of a public land mobile network identity PLMN ID corresponding to the UE or an edge computing service provider identity ECSP ID corresponding to the UE; and
sending, by the first EES, information about the first EAS to the second EES.

2. The method according to claim 1, wherein the determining, by the first EES, the first EAS based on at least one of a PLMN ID corresponding to the UE or an ECSP ID corresponding to the UE comprises at least one of the following manners:
determining, by the first EES, the first EAS based on a PLMN ID corresponding to an EAS associated with the first EES and the PLMN ID of the UE; or
determining, by the first EES, the first EAS based on an ECSP ID corresponding to an EAS associated with the first EES and the ECSP ID of the UE, wherein
the first EAS is an EAS associated with the first EES.

3. The method according to claim 2, wherein the method further comprises:
sending, by the first EES, at least one of the following information to a first edge configuration server ECS:
a PLMN ID corresponding to the first EAS, an ECSP ID corresponding to the first EAS, a PLMN ID corresponding to the first EES, or an ECSP ID corresponding to the first EES.

4. The method according to claim 3, wherein when the at least one piece of information comprises at least one of information about the PLMN ID corresponding to the first EES or information about the ECSP ID corresponding to the first EES, the method further comprises at least one of the following:
determining, by the first EES based on the PLMN ID corresponding to the first EAS, the PLMN ID corresponding to the first EES; or
determining, by the first EES based on the ECSP ID corresponding to the first EAS, the ECSP ID corresponding to the first EES.

5. The method according to any one of claims 1 to 4, wherein the method further comprises:
receiving, by the first EES, at least one of the PLMN ID corresponding to the UE or the ECSP ID corresponding to the UE from a core network element.

6. The method according to any one of claims 1 to 4, wherein the information for requesting to determine the first EAS for the UE served by the second EES comprises at least one of the PLMN ID corresponding to the UE or the ECSP ID corresponding to the UE.

7. The method according to any one of claims 1 to 6, wherein the method further comprises:
receiving, by the first EES, at least one of the PLMN ID corresponding to the first EAS or the ECSP ID corresponding to the first EAS from the first EAS.

8. The method according to any one of claims 1 to 7, wherein the method further comprises:
sending, by the first EAS, at least one of the PLMN ID corresponding to the first EAS or the ECSP ID corresponding to the first EAS to the first EES.

9. A device selection method, comprising:
receiving, by a first ECS from a second EES or a second ECS, information for requesting to determine a first EES for UE served by the second EES;
after the first ECS receives the information for requesting to determine the first EES for the UE served by the second EES, determining, by the first ECS, the first EES based on at least one of a PLMN ID corresponding to the UE or an ECSP ID corresponding to the UE; and
sending, by the first ECS, information about the first EES to the second ECS.

10. The method according to claim 9, wherein the determining, by the first ECS, the first EES based on at least one of a PLMN ID corresponding to the UE or an ECSP ID corresponding to the UE comprises at least one of the following manners:
determining, by the first ECS, the first EES based on the PLMN ID corresponding to the UE and a PLMN ID corresponding to the first EES; or
determining, by the first ECS, the first EES based on the ECSP ID corresponding to the UE and an ECSP ID corresponding to the first EES.

11. The method according to claim 10, wherein the determining, by the first ECS, the first EES based on at least one of the PLMN ID corresponding to the UE or a PLMN ID corresponding to the first EES comprises:
determining, by the first ECS, the first EES based on the PLMN ID corresponding to the UE, the PLMN ID corresponding to the first EES, and a capability of an EAS associated with the first EES.

12. The method according to claim 10, wherein the determining, by the first ECS, the first EES based on at least one of the ECSP ID corresponding to the UE or an ECSP ID corresponding to the first EES comprises:
determining, by the first ECS, the first EES based on the ECSP ID corresponding to the UE, the ECSP ID corresponding to the first EES, and a capability of an EAS associated with the first EES.

13. The method according to any one of claims 9 to 12, wherein the method further comprises:
receiving, by the first ECS, at least one of the following information from the first EES:
a PLMN ID corresponding to the first EAS, an ECSP ID corresponding to the first EAS, the PLMN ID corresponding to the first EES, or the ECSP ID corresponding to the first EES.

14. The method according to any one of claims 9 to 13, wherein the information for requesting to determine the first EES for the UE comprises at least one of the PLMN ID corresponding to the UE or the ECSP ID corresponding to the UE.

15. A device selection method, comprising:
receiving, by a second ECS from a second EES, information for requesting to determine a first EES for UE served by the second EES;
after the second ECS receives the information for requesting to determine the first EES for the UE served by the second EES, determining, by the second ECS, the first EES based on at least one of a PLMN ID corresponding to the UE or an ECSP ID corresponding to the UE, and
sending, by the second ECS, information about the first EES to the second EES based on the first EES.

16. The method according to claim 15, wherein the determining, by the second ECS, the first EES based on at least one of a PLMN ID corresponding to the UE or an ECSP ID corresponding to the UE comprises at least one of the following manners:
determining, by the second ECS, the first EES based on the PLMN ID corresponding to the UE and a PLMN ID corresponding to the first EES; or
determining, by the second ECS, the first EES based on the ECSP ID corresponding to the UE and an ECSP ID corresponding to the first EES.

17. The method according to claim 16, wherein the determining, by the second ECS, the first EES based on the PLMN ID corresponding to the UE or a PLMN ID corresponding to the first EES comprises:
determining, by the second ECS, the first EES based on the PLMN ID corresponding to the UE, the PLMN ID corresponding to the first EES, and a capability of an EAS associated with the first EES.

18. The method according to claim 16, wherein the determining, by the second ECS, the first EES based on the ECSP ID corresponding to the UE and an ECSP ID corresponding to the first EES comprises:
determining, by the second ECS, the first EES based on the ECSP ID corresponding to the UE, the ECSP ID corresponding to the first EES, and a capability of an EAS associated with the first EES.

19. The method according to any one of claims 15 to 18, wherein the information for requesting to determine the first EES for the UE comprises at least one of the PLMN ID corresponding to the UE or the ECSP ID corresponding to the UE.

20. A device selection method, comprising:
sending, by a second EES to a first ECS or a second ECS, information for requesting to determine a first EES for UE served by the second EES;
receiving, by the second EES from the first ECS or the second ECS, information for determining the first EES for the UE; and
after the second EES receives the information for determining the first EES for the UE, determining, by the second EES, the first EES based on at least one of a PLMN ID corresponding to the UE or an ECSP ID corresponding to the UE.

21. The method according to claim 20, wherein the determining, by the second EES, the first EES based on at least one of a PLMN ID corresponding to the UE or an ECSP ID corresponding to the UE comprises at least one of the following manners:
determining, by the UE, the first EES based on the PLMN ID corresponding to the UE and a PLMN ID corresponding to the first EES; or
determining, by the UE, the first EES based on the ECSP ID corresponding to the UE and an ECSP ID corresponding to the first EES.

22. The method according to claim 21, wherein the determining, by the second EES, the first EES based on the PLMN ID corresponding to the UE and a PLMN ID corresponding to the first EES comprises:
determining, by the UE, the first EES based on the PLMN ID corresponding to the UE, the PLMN ID corresponding to the first EES, and a capability of an EAS associated with the first EES.

23. The method according to claim 21, wherein the determining, by the second EES, the first EES based on the ECSP ID corresponding to the UE and an ECSP ID corresponding to the first EES comprises:
determining, by the UE, the first EES based on the ECSP ID corresponding to the UE, the ECSP ID corresponding to the first EES, and a capability of an EAS associated with the first EES.

24. The method according to any one of claims 21 to 23, wherein the information for determining the first EES for the UE comprises at least one of the PLMN ID corresponding to the first EES or the ECSP ID corresponding to the first EES.

25. The method according to any one of claims 20 to 24, wherein the method further comprises:
sending, by the second EES, information for requesting to determine a first EAS for the UE to the first ECS, the second ECS, or the first EES, wherein the first EAS is an EAS associated with the first EES;
receiving, by the second EES from the first ECS, the second ECS, or the first EES, information for determining the first EAS for the UE; and
after the second EES receives the information for determining the first EAS for the UE, determining, by the second EES, the first EAS based on at least one of the PLMN ID corresponding to the UE or the ECSP ID corresponding to the UE.

26. The method according to claim 25, wherein the determining, by the second EES, the first EAS based on at least one of the PLMN ID corresponding to the UE or the ECSP ID corresponding to the UE comprises at least one of the following manners:
determining, by the second EES, the first EAS based on a PLMN ID corresponding to the EAS associated with the first EES and the PLMN ID corresponding to the UE; or
determining, by the second EES, the first EAS based on an ECSP ID corresponding to the EAS associated with the first EES and the ECSP ID corresponding to the UE, wherein
the first EAS is the EAS associated with the first EES.

27. The method according to claim 25 or 26, wherein the information for determining the first EAS for the UE comprises at least one of the PLMN ID corresponding to the EAS associated with the first EES or the ECSP ID corresponding to the EAS associated with the first EES.

28. The method according to any one of claims 20 to 27, wherein the information for requesting to determine the first EES for the UE comprises at least one of the PLMN ID corresponding to the UE or the ECSP ID corresponding to the UE.

29. The method according to any one of claims 20 to 28, wherein the method further comprises:
obtaining, by the second EES, at least one of the PLMN ID corresponding to the UE or the ECSP ID corresponding to the UE.

30. The method according to claim 29, wherein the obtaining, by the second EES, at least one of the PLMN ID corresponding to the UE or the ECSP ID corresponding to the UE comprises:
receiving, by the second EES, at least one of the PLMN ID corresponding to the UE or the ECSP ID corresponding to the UE from a core network element or a second EAS, wherein the second EAS is an EAS associated with the second EES.

31. The method according to claim 30, wherein when the second EES receives, from the core network element, at least one of the PLMN ID corresponding to the UE or the ECSP ID corresponding to the UE, the method further comprises:
sending, by the second EES, at least one of the PLMN ID corresponding to the UE or the ECSP ID corresponding to the UE to the second EAS.

32. A device selection method, comprising:
sending, by a second EES, to a first ECS, a second ECS, or a first EES, information for requesting to determine a first EAS for UE served by the second EES, wherein the first EAS is an EAS associated with the first EES;
receiving, by the second EES from the first ECS, the second ECS, or the first EES, information for determining the first EAS for the UE served by the second EES; and
after the second EES receives the information for determining the first EAS for the UE served by the second EES, determining, by the second EES, the first EAS based on at least one of a PLMN ID corresponding to the UE or an ECSP ID corresponding to the UE.

33. The method according to claim 32, wherein the determining, by the second EES, the first EAS based on at least one of a PLMN ID corresponding to the UE or an ECSP ID corresponding to the UE comprises at least one of the following manners:
determining, by the second EES, the first EAS based on a PLMN ID corresponding to an EAS associated with the first EES and the PLMN ID corresponding to the UE; or
determining, by the second EES, the first EAS based on an ECSP ID corresponding to the EAS associated with the first EES and the ECSP ID corresponding to the UE, wherein
the first EAS is the EAS associated with the first EES.

34. The method according to claim 32 or 33, wherein when the second EES sends, to the first ECS or the second ECS, the information for requesting to determine the first EAS for the UE, the method further comprises:
sending, by the second EES, to the first ECS or the second ECS, information for requesting to determine the first EES for the UE;
receiving, by the second EES from the first ECS or the second ECS, information for determining the first EES for the UE; and
after the second EES receives the information for determining the first EES for the UE, determining, by the second EES, the first EES based on at least one of the PLMN ID corresponding to the UE or the ECSP ID corresponding to the UE.

35. The method according to claim 34, wherein the determining, by the second EES, the first EES based on at least one of the PLMN ID corresponding to the UE or the ECSP ID corresponding to the UE comprises at least one of the following manners:
determining, by the second EES, the first EES based on the PLMN ID corresponding to the UE and a PLMN ID corresponding to the first EES; or
determining, by the second EES, the first EES based on the ECSP ID corresponding to the UE and an ECSP ID corresponding to the first EES.

36. The method according to claim 35, wherein the determining, by the second EES, the first EES based on the PLMN ID corresponding to the UE and a PLMN ID corresponding to the first EES comprises:
determining, by the second EES, the first EES based on the PLMN ID corresponding to the UE, the PLMN ID corresponding to the first EES, and a capability of the EAS associated with the first EES.

37. The method according to claim 35, wherein the determining, by the second EES, the first EES based on the ECSP ID corresponding to the UE and an ECSP ID corresponding to the first EES comprises:
determining, by the second EES, the first EES based on the ECSP ID corresponding to the UE, the ECSP ID corresponding to the first EES, and a capability of the EAS associated with the first EES.

38. The method according to any one of claims 34 to 37, wherein the information for determining the first EES for the UE comprises at least one of the PLMN ID corresponding to the first EES or the ECSP ID corresponding to the first EES.

39. The method according to any one of claims 32 to 38, wherein the information for determining the first EAS for the UE comprises at least one of a PLMN ID corresponding to the first EAS or an ECSP ID corresponding to the first EAS.

40. The method according to any one of claims 32 to 39, wherein the method further comprises:
obtaining, by the second EES, at least one of the PLMN ID corresponding to the UE or the ECSP ID corresponding to the UE.

41. The method according to claim 40, wherein the obtaining, by the second EES, at least one of the PLMN ID corresponding to the UE or the ECSP ID corresponding to the UE comprises:
receiving, by the second EES, at least one of the PLMN ID corresponding to the UE or the ECSP ID corresponding to the UE from a core network element or a second EAS, wherein the second EAS is an EAS associated with the second EES.

42. The method according to claim 41, wherein when the second EES receives at least one of the PLMN ID corresponding to the UE or the ECSP ID corresponding to the UE from the core network element, the method further comprises:
sending, by the second EES, at least one of the PLMN ID corresponding to the UE or the ECSP ID corresponding to the UE to the second EAS.

43. A device selection method, comprising:
receiving, by a first EAS from a first EES, information for requesting to determine whether the first EAS has a capability of serving UE, wherein the UE provides a service via a second EES;
after the first EAS receives the information for requesting the first EAS to determine whether the first EAS has the capability of serving the UE, determining, by the first EAS based on at least one of a PLMN ID corresponding to the UE or an ECSP ID corresponding to the UE, that the first EAS has the capability of serving the UE; and
sending, by the first EAS to the first EES, information indicating that the first EAS has the capability of serving the UE.

44. The method according to claim 43, wherein the determining, by the first EAS based on at least one of a PLMN ID corresponding to the UE or an ECSP ID corresponding to the UE, that the first EAS has the capability of serving the UE comprises at least one of the following manners:
determining, by the first EAS based on the PLMN ID corresponding to the UE and a PLMN ID corresponding to the first EAS, that the first EAS has the capability of serving the UE; or
determining, by the first EAS based on the ECSP ID corresponding to the UE and an ECSP ID corresponding to the first EAS, that the first EAS has the capability of serving the UE.

45. The method according to claim 43 or 44, wherein the method further comprises:
receiving, by the first EAS, at least one of the PLMN ID corresponding to the UE or the ECSP ID corresponding to the UE from the first EES or a core network element.

46. A device selection method, comprising:
sending, by a second EAS to a second EES, information for requesting to determine a first EAS for UE served by the second EES, wherein the second EAS is an EAS associated with the second EES;
receiving, by the second EAS from the second EES, information for determining the first EAS for the UE served by the second EES; and
after the second EAS receives the information for determining the first EAS for the UE served by the second EES, determining, by the second EAS, the first EAS based on at least one of a PLMN ID corresponding to the UE or an ECSP ID corresponding to the UE.

47. The method according to claim 46, wherein the determining, by the second EAS, the first EAS based on at least one of a PLMN ID corresponding to the UE or an ECSP ID corresponding to the UE comprises at least one of the following manners:
determining, by the second EAS, the first EAS based on a PLMN ID corresponding to an EAS associated with a first EES and the PLMN ID corresponding to the UE; or
determining, by the second EAS, the first EAS based on an ECSP ID corresponding to the EAS associated with the first EES and the ECSP ID corresponding to the UE, wherein
the first EAS is an EAS associated with the first EES.

48. The method according to claim 46 or 47, wherein the information for determining the first EAS for the UE served by the second EES comprises at least one of the PLMN ID corresponding to the EAS associated with the first EES or the ECSP ID corresponding to the EAS associated with the first EES.

49. The method according to any one of claims 46 to 48, wherein the method further comprises:
receiving, by the second EAS, at least one of the PLMN ID corresponding to the UE or the ECSP ID corresponding to the UE from the second EES.

50. A device selection method, comprising:
receiving, by a first ECS from a second EES, information for requesting to determine a first EAS for UE served by the second EES;
after the first ECS receives the information for requesting to determine the first EAS for the UE, determining, by the first ECS, the first EAS based on at least one of a PLMN ID corresponding to the UE or an ECSP ID corresponding to the UE; and
sending, by the first ECS, information about the first EAS to the second EES.

51. The method according to claim 50, wherein the determining, by the first ECS, the first EAS based on at least one of a PLMN ID corresponding to the UE or an ECSP ID corresponding to the UE comprises at least one of the following manners:
determining, by the first ECS, the first EAS based on the PLMN ID corresponding to the UE and a PLMN ID corresponding to an EAS associated with a first EES; or
determining, by the first ECS, the first EAS based on the ECSP ID corresponding to the UE and an ECSP ID corresponding to the EAS associated with the first EES, wherein the first EAS is an EAS associated with the first EES.

52. The method according to claim 50 or 51, wherein the method further comprises:
receiving, by the first ECS from the second EES or a second ECS, information for requesting to determine the first EES for the UE;
after the first ECS receives the information for requesting to determine the first EES for the UE, determining, by the first ECS, the first EES based on at least one of the PLMN ID corresponding to the UE or the ECSP ID corresponding to the UE; and
sending, by the first ECS, information about the first EES to the second ECS.

53. The method according to claim 52, wherein the determining, by the first ECS, the first EES based on at least one of the PLMN ID corresponding to the UE or the ECSP ID corresponding to the UE comprises at least one of the following manners:
determining, by the first ECS, the first EES based on the PLMN ID corresponding to the UE and a PLMN ID corresponding to the first EES; or
determining, by the first ECS, the first EES based on the ECSP ID corresponding to the UE and an ECSP ID corresponding to the first EES.

54. The method according to claim 53, wherein the determining, by the first ECS, the first EES based on the PLMN ID corresponding to the UE and a PLMN ID corresponding to the first EES comprises:
determining, by the first ECS, the first EES based on the PLMN ID corresponding to the UE, the PLMN ID corresponding to the first EES, and a capability of the EAS associated with the first EES.

55. The method according to claim 53 or 54, wherein the determining, by the first ECS, the first EES based on the ECSP ID corresponding to the UE and an ECSP ID corresponding to the first EES comprises:
determining, by the first ECS, the first EES based on the ECSP ID corresponding to the UE, the ECSP ID corresponding to the first EES, and the capability of the EAS associated with the first EES.

56. The method according to any one of claims 50 to 55, wherein the information for requesting to determine the first EAS for the UE comprises at least one of the PLMN ID corresponding to the UE or the ECSP ID corresponding to the UE.

57. A device selection method, comprising:
receiving, by a second ECS from a second EES, information for requesting to determine a first EAS for UE served by the second EES;
after the second ECS receives the information for requesting to determine the first EAS for the UE, determining, by the second ECS, the first EAS based on at least one of a PLMN ID corresponding to the UE or an ECSP ID corresponding to the UE; and
sending, by the second ECS, information about the first EAS to the second EES.

58. The method according to claim 57, wherein the method further comprises:
receiving, by the second ECS from the second EES, the information for requesting to determine the first EAS for the UE;
after the second ECS receives the information for requesting to determine the first EAS for the UE, determining, by the second ECS, the first EAS based on at least one of the PLMN ID corresponding to the UE or the ECSP ID corresponding to the UE; and
sending, by the second ECS, information about the first EAS to the second EES.

59. The method according to claim 58, wherein the determining, by the second ECS, the first EAS based on at least one of the PLMN ID corresponding to the UE or the ECSP ID corresponding to the UE comprises at least one of the following manners:
determining, by the second ECS, the first EAS based on a PLMN ID corresponding to an EAS associated with a first EES and the PLMN ID corresponding to the UE; or
determining, by the second ECS, the first EAS based on an ECSP ID corresponding to an EAS associated with a first EES and the ECSP ID corresponding to the UE, wherein the first EAS is an EAS associated with the first EES.

60. The method according to any one of claims 57 to 59, wherein the method further comprises:
receiving, by the second ECS from the second EES, information for requesting to determine the first EES for the UE;
after the second ECS receives the information for requesting to determine the first EES for the UE, determining, by the second ECS, the first EES based on at least one of the PLMN ID corresponding to the UE or the ECSP ID corresponding to the UE; and
sending, by the second ECS, information about the first EES to the second EES based on the first EES.

61. The method according to claim 60, wherein the determining, by the second ECS, the first EES based on at least one of the PLMN ID corresponding to the UE or the ECSP ID corresponding to the UE comprises at least one of the following manners:
determining, by the second ECS, the first EES based on the PLMN ID corresponding to the UE and a PLMN ID corresponding to the first EES; or
determining, by the second ECS, the first EES based on the ECSP ID corresponding to the UE and an ECSP ID corresponding to the first EES.

62. The method according to claim 61, wherein the determining, by the second ECS, the first EES based on the PLMN ID corresponding to the UE and a PLMN ID corresponding to the first EES comprises:
determining, by the second ECS, the first EES based on the PLMN ID corresponding to the UE, the PLMN ID corresponding to the first EES, and a capability of the EAS associated with the first EES.

63. The method according to claim 61 or 62, wherein the determining, by the second ECS, the first EES based on the ECSP ID corresponding to the UE and an ECSP ID corresponding to the first EES comprises:
determining, by the second ECS, the first EES based on the ECSP ID corresponding to the UE, the ECSP ID corresponding to the first EES, and the capability of the EAS associated with the first EES.

64. The method according to any one of claims 57 to 63, wherein the method further comprises:
receiving, by the second ECS, at least one of the PLMN ID corresponding to the first EES or the ECSP ID corresponding to the first EES from a first ECS, wherein the first EES is an EES associated with the first ECS.

65. The method according to any one of claims 57 to 64, wherein the information for requesting to determine the first EAS for the UE comprises at least one of the PLMN ID corresponding to the UE or the ECSP ID corresponding to the UE.

66. A device selection method, comprising:
receiving, by a first EES, at least one of a PLMN ID corresponding to a first EAS or an ECSP ID corresponding to the first EAS from the first EAS, wherein the first EAS is any EAS in EASs associated with the first EES.

67. The method according to claim 66, wherein the method further comprises:
sending, by the first EES to a first ECS, at least one of the following information: the PLMN ID corresponding to the first EAS, the ECSP ID corresponding to the first EAS, a PLMN ID corresponding to the first EES, or an ECSP ID corresponding to the first EES.

68. The method according to claim 67, wherein when the at least one piece of information comprises at least one of the PLMN ID corresponding to the first EES and the ECSP ID corresponding to the first EES, the method further comprises any one of the following:
determining, by the first EES based on the PLMN ID corresponding to the first EAS, the PLMN ID corresponding to the first EES; or
determining, by the first EES based on the ECSP ID corresponding to the first EAS, the ECSP ID corresponding to the first EES.

69. The method according to any one of claims 66 to 68, wherein the method further comprises:
receiving, by the first EES, at least one of a PLMN ID corresponding to UE and an ECSP ID corresponding to the UE from a core network element.

70. The method according to any one of claims 66 to 69, wherein the method further comprises:
receiving, by the first EES, at least one of the PLMN ID corresponding to the UE and the ECSP ID corresponding to the UE from a second EES, wherein the second EES serves the UE.

71. The method according to any one of claims 66 to 70, wherein the method further comprises:
sending, by the first EAS, at least one of the PLMN ID corresponding to the first EAS and the ECSP ID corresponding to the first EAS to the first EES.

72. A device selection apparatus, wherein the apparatus comprises:
one or more functional modules, wherein the one or more functional modules are configured to perform the method according to any one of claims 1 to 8, any one of claims 9 to 14, any one of claims 15 to 19, any one of claims 20 to 31, any one of claims 32 to 42, any one of claims 43 to 45, any one of claims 46 to 49, any one of claims 50 to 56, any one of claims 57 to 65, or any one of claims 66 to 71.

73. A device selection apparatus, comprising:
a processor, configured to execute a computer program stored in a memory, so that the apparatus performs the method according to any one of claims 1 to 8, any one of claims 9 to 14, any one of claims 15 to 19, any one of claims 20 to 31, any one of claims 32 to 42, any one of claims 43 to 45, any one of claims 46 to 49, any one of claims 50 to 56, any one of claims 57 to 65, or any one of claims 66 to 71.

74. The apparatus according to claim 50, wherein the apparatus further comprises the memory.

75. A computer-readable storage medium, wherein the computer-readable storage medium stores a computer program, and when the computer program is run on a computer, the computer is enabled to perform the method according to any one of claims 1 to 8, any one of claims 9 to 14, any one of claims 15 to 19, any one of claims 20 to 31, any one of claims 32 to 42, any one of claims 43 to 45, any one of claims 46 to 49, any one of claims 50 to 56, any one of claims 57 to 65, or any one of claims 66 to 71.

76. A computer program product, wherein the computer program product comprises instructions used to perform the method according to any one of claims 1 to 8, any one of claims 9 to 14, any one of claims 15 to 19, any one of claims 20 to 31, any one of claims 32 to 42, any one of claims 43 to 45, any one of claims 46 to 49, any one of claims 50 to 56, any one of claims 57 to 65, or any one of claims 66 to 71.

77. A device selection system, comprising one or more of the following execution bodies described above:
a first EES, a first EAS, a first ECS, a second ECS, a second EES, or a second EAS.
